# EUROPEAN PATENT APPLICATION

(11) **EP 4 823 042 A2**
(43) Date of publication of application: **14.10.2026**
(21) Application number: 26186884.8
(22) Date of filing: 18.11.2024
(51) Int. Cl.: H04L 9/40

(54) **ATTRIBUTE-BASED ENCRYPTION FOR SELECTIVE DOCUMENT CONTENT PROTECTION**

(30) Priority: 16.11.2023 US 202363600025 P; 12.07.2024 US 202463670692 P
(62) Document number(s) of the earlier application(s) in accordance with Art. 76 EPC: 24213692.7 / 4 557 144
(71) Applicant: NTT DATA Services Federal Government, LLC, Herndon, VA 20171-5298 (US); NTT Research, Inc., Sunnyvale, CA 94085 (US); NTT Belgium NV/SA, 1831 Machelen (BE)
(72) Inventor: BONGIOVANNI, Nat, Fairfax, Virginia (US); GOTO, Takashi, Sunnyvale, California (US); SHAHLAVI, Farid, Bethesda, Maryland (US); WEIDMAN, Tim, Herndon, Virginia (US); YU, Paul, Haymarket, Virginia (US); MATHIS, Pascal, Brussels (BE); CABAY, Jean-Philippe, Aubel (BE)
(74) Representative: Appelt, Christian W.

(57) **Abstract**

The present disclosure provides a method for securing document content. A document security manager receives a digital document containing original text and image content. The original text content is processed to identify text portions by parsing annotations, analyzing proximate text, extracting content within the determined scope, and determining encryption attributes. The original image content is processed to identify image portions by detecting user-defined selections or employing a neural network to identify sensitive objects. Encrypt content requests are generated including the identified text and image portions with associated attributes and metadata. The requests are transmitted to a cryptographic engine, which returns encrypted content. A partially encrypted document is built by replacing original content with masking symbols, applying visual obfuscation, embedding encrypted content as metadata, and updating document properties to indicate encrypted content.

## Description

### CROSS-REFERENCE TO RELATED APPLICATIONS

This application claims the benefit of U.S. Provisional Application No. 63/600,025, filed November 16, 2023, and U.S. Provisional Application No. 63/670,692, filed July 12, 2024, both of which are hereby incorporated by reference in their entirety.

### FIELD OF INVENTION

The present disclosure relates to document security systems, and more particularly to an attribute-based encryption system for selectively encrypting and decrypting portions of documents based on user attributes.

### BACKGROUND

Document and image security has been an important concern for organizations and individuals since the advent of digital information systems. As the volume and sensitivity of digital documents and images have increased over the years, so too has the need for sophisticated security measures to protect this valuable information from unauthorized access, modification, or distribution.

Traditional document and image security methods have primarily relied on access control lists (ACLs) and role-based access control (RBAC) systems to manage user permissions. While these approaches have been effective in controlling access at a file or folder level, they may lack the granularity required for protecting specific portions of documents or regions of images that may contain varying levels of sensitive information.

The concept of data classification has emerged as an important component in modern information security frameworks. Organizations typically categorize their data into different levels of sensitivity, such as public, internal, confidential, and highly confidential. However, implementing these classifications within individual documents and images has proven to be a significant challenge, particularly when dealing with complex, multi-section documents or images that may contain information of varying sensitivity levels.

Encryption has long been recognized as a powerful tool for protecting sensitive information. Symmetric key encryption algorithms, such as the Advanced Encryption Standard (AES), provide robust protection for data at rest and in transit. However, traditional encryption methods typically encrypt entire files, documents, or images, which can be problematic when different users require access to different portions of the same document or regions of an image based on their security clearance or role within an organization.

Attribute-Based Encryption (ABE) has emerged as a promising solution to address the limitations of traditional encryption methods. ABE allows for fine-grained access control by encrypting data based on a set of attributes or policies. This approach enables more flexible and expressive access control policies compared to traditional methods. However, the implementation of ABE in real-world document and image security systems has been hindered by several factors, including the complexity of key management, performance overhead, and the lack of user-friendly interfaces for specifying encryption policies.

The integration of encryption technologies with widely used document and image formats, such as those used in Microsoft Office applications or common image file types, has been an ongoing challenge. While these applications often provide basic password protection features, they may lack the sophistication required for implementing granular, attribute-based access control within documents and images. This limitation has forced organizations to rely on separate, often cumbersome, document and image management systems to enforce their security policies.

One of the key challenges in implementing advanced document and image security measures is maintaining the usability and readability of protected content. When portions of a document or regions of an image are encrypted or redacted, the overall structure and formatting can be significantly altered, making it difficult for users to work with the content effectively. This is particularly problematic in collaborative environments where multiple users with different access levels need to work on the same document or image simultaneously.

The visual representation of encrypted or redacted content within documents and images has also been a persistent issue. Traditional methods often replace sensitive content with obvious placeholders or blank spaces, which can disrupt the flow of the document or the integrity of the image and potentially reveal the presence and extent of hidden information. This can be particularly problematic in situations where the mere knowledge of the existence of sensitive information could be valuable to unauthorized parties.

Furthermore, the process of specifying which portions of a document or regions of an image should be encrypted and at what security level has traditionally been a manual and time-consuming task. Document authors or security administrators often need to manually mark or tag sensitive sections, which is prone to human error and can be impractical for large volumes of documents and images. This process becomes even more complex when dealing with dynamic documents that are frequently updated or when security classifications need to be changed over time.

Existing solutions have attempted to address these challenges through various means, such as specialized document and image viewers, custom file formats, or complex document management systems. However, these approaches often require significant changes to existing workflows, extensive user training, and may not integrate well with standard office productivity tools. This has led to resistance in adoption and reduced effectiveness of security measures in practice.

The lack of intuitive user interfaces for managing document and image security has been a significant barrier to the widespread adoption of advanced security measures. Many existing systems require users to have a deep understanding of cryptographic concepts or to navigate complex policy definition interfaces. This complexity not only increases the likelihood of misconfiguration but also discourages users from fully utilizing the security features available to them.

Additionally, the management of encryption keys and access policies across large organizations with dynamic user roles and responsibilities has proven to be a significant challenge. The need for frequent updates to access rights, the onboarding and offboarding of users, and the management of temporary access grants all contribute to the complexity of maintaining an effective document and image security system.

Another important issue is the performance impact of encryption and decryption operations, particularly when dealing with large documents, high-resolution images, or high volumes of access requests. The computational overhead of these operations can lead to noticeable delays in document and image access and editing, potentially impacting user productivity and satisfaction.

In light of these challenges, there is a clear need for innovative solutions that can provide granular, attribute-based encryption for documents and images while maintaining ease of use, preserving document structure and image integrity, and integrating seamlessly with existing document and image workflows. Such solutions may strike a balance between robust security and user-friendly operation, enabling organizations to protect their sensitive information effectively without imposing undue burdens on their users or IT infrastructure.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

According to an aspect of the present disclosure, a method for securing document content is provided. The method includes receiving, by a document security manager implemented on a computing device, a digital document containing original text content and original image content. The method includes processing the original text content to identify text content portions by: parsing the document to locate in-line text annotations, analyzing proximate text to determine the scope of each annotation, extracting text content within the determined scope, and determining encryption attributes for an attribute-based encryption scheme based on the in-line text annotations. The method includes processing the original image content to identify image portions by: detecting user-defined selections of image regions through a graphical interface, or employing a trained neural network to automatically identify and classify sensitive objects within the images. The method includes generating one or more encrypt content requests, the one or more requests including: the identified text portions with their associated encryption attributes, the identified image portions with corresponding bounding box coordinates, and metadata specifying the encryption schemes to be applied. The method includes transmitting the encrypt content requests to a cryptographic engine via a secure communication channel. The method includes receiving, from the cryptographic engine, encrypted text content for the text portions and encrypted image content for the image portions, wherein the cryptographic engine applies an attribute-based encryption scheme to the text portions and image portions. The method includes building a partially encrypted document by: replacing original text content with masking symbols, programmatically adjusting the masking symbol width to maintain document layout and formatting, applying visual obfuscation techniques to the original image content based on sensitivity levels, embedding the encrypted text and image content as metadata within the document structure, and updating document properties to indicate the presence of encrypted content.

According to other aspects of the present disclosure, the method may include one or more of the following features. The attribute-based encryption scheme may utilize a ciphertext-policy attribute-based encryption (CP-ABE) algorithm, and the encryption attributes for text portions may include: access policy expressions defining combinations of user attributes required for decryption, time-based constraints specifying validity periods for decryption keys, and hierarchical attribute structures representing organizational roles and clearance levels. Processing the original image content may further comprise: segmenting the image into multiple regions using a convolutional neural network, extracting feature vectors for each segmented region using a pre-trained deep learning model, classifying the sensitivity level of each region based on the extracted features, and generating encryption attributes for each region based on its classified sensitivity level and content type. The method may further comprise: generating a decryption key request based on authenticated user attributes; transmitting the decryption key request to a key management server; receiving a decryption key from the key management server, wherein the decryption key is derived from the user's attribute set and a master secret key; selectively decrypting portions of the document using the received decryption key; and rendering a partially decrypted version of the document with authorized content visible and unauthorized content remaining obfuscated. The cryptographic engine may implement a multi-authority attribute-based encryption scheme, and generating the encrypt content requests may further comprise: assigning each text and image portion to one or more attribute authorities based on the content type and sensitivity; generating separate encryption policies for each assigned authority; and including authority identifiers and corresponding encryption policies in the encrypt content requests. Building the partially encrypted document may further comprise: generating a document-specific symmetric key; encrypting the symmetric key using the attribute-based encryption scheme with a master public key; encrypting the text and image portions using the symmetric key; embedding the encrypted symmetric key and the encrypted content within the document structure; and including key recovery information that allows authorized users to reconstruct decryption keys using their attribute credentials and a subset of master private key shares. The digital document may comprise a video file, and processing the original image content may further comprise: extracting individual frames from the video file; analyzing the extracted frames to identify sensitive objects or regions; generating temporal bounding boxes to track the identified sensitive objects or regions across multiple frames; applying the visual obfuscation techniques to the sensitive objects or regions within each affected frame; and reconstructing the video file with the obfuscated frames while maintaining the original video format and playback characteristics. Processing the original text content may further comprise: identifying text decorations within the document, including bold, italic, underline, strikethrough, or color formatting; associating the identified text decorations with corresponding sensitivity levels or encryption attributes; and adjusting the encryption attributes for text portions based on the associated text decorations.

According to another aspect of the present disclosure, a system for securing document content is provided. The system includes a document security manager implemented on a computing device, the document security manager configured to: receive a digital document containing original text content and original image content; process the original text content to identify text content portions by: parsing the document to locate in-line text annotations, analyzing proximate text to determine the scope of each annotation, extracting text content within the determined scope, and determining encryption attributes for an attribute-based encryption scheme based on the in-line text annotations; process the original image content to identify image portions by: detecting user-defined selections of image regions through a graphical interface, or employing a trained neural network to automatically identify and classify sensitive objects within the images; generate one or more encrypt content requests, the one or more requests including: the identified text portions with their associated encryption attributes, the identified image portions with corresponding bounding box coordinates, and metadata specifying the encryption schemes to be applied; transmit the encrypt content requests to a cryptographic engine via a secure communication channel; receive, from the cryptographic engine, encrypted text content for the text portions and encrypted image content for the image portions, wherein the cryptographic engine applies an attribute-based encryption scheme to the text portions and image portions; and build a partially encrypted document by: replacing original text content with masking symbols, programmatically adjusting the masking symbol width to maintain document layout and formatting, applying visual obfuscation techniques to the original image content based on sensitivity levels, embedding the encrypted text and image content as metadata within the document structure, and updating document properties to indicate the presence of encrypted content.

According to other aspects of the present disclosure, the system may include one or more of the following features. The attribute-based encryption scheme may utilize a ciphertext-policy attribute-based encryption (CP-ABE) algorithm, and the encryption attributes for text portions may include: access policy expressions defining combinations of user attributes required for decryption, time-based constraints specifying validity periods for decryption keys, and hierarchical attribute structures representing organizational roles and clearance levels. Processing the original image content may further comprise: segmenting the image into multiple regions using a convolutional neural network, extracting feature vectors for each segmented region using a pre-trained deep learning model, classifying the sensitivity level of each region based on the extracted features, and generating encryption attributes for each region based on its classified sensitivity level and content type. The document security manager may be further configured to: generate a decryption key request based on authenticated user attributes; transmit the decryption key request to a key management server; receive a decryption key from the key management server, wherein the decryption key is derived from the user's attribute set and a master secret key; selectively decrypt portions of the document using the received decryption key; and render a partially decrypted version of the document with authorized content visible and unauthorized content remaining obfuscated. The cryptographic engine may implement a multi-authority attribute-based encryption scheme, and generating the encrypt content requests may further comprise: assigning each text and image portion to one or more attribute authorities based on the content type and sensitivity; generating separate encryption policies for each assigned authority; and including authority identifiers and corresponding encryption policies in the encrypt content requests. Building the partially encrypted document may further comprise: generating a document-specific symmetric key; encrypting the symmetric key using the attribute-based encryption scheme with a master public key; encrypting the text and image portions using the symmetric key; embedding the encrypted symmetric key and the encrypted content within the document structure; and including key recovery information that allows authorized users to reconstruct decryption keys using their attribute credentials and a subset of master private key shares. The digital document may comprise a video file, and processing the original image content may further comprise: extracting individual frames from the video file; analyzing the extracted frames to identify sensitive objects or regions; generating temporal bounding boxes to track the identified sensitive objects or regions across multiple frames; applying the visual obfuscation techniques to the sensitive objects or regions within each affected frame; and reconstructing the video file with the obfuscated frames while maintaining the original video format and playback characteristics.

According to another aspect of the present disclosure, a non-transitory computer-readable medium storing instructions that, when executed by a processor, cause the processor to perform a method for securing document content is provided. The method includes receiving a digital document containing original text content and original image content. The method includes processing the original text content to identify text content portions by: parsing the document to locate in-line text annotations, analyzing proximate text to determine the scope of each annotation, extracting text content within the determined scope, and determining encryption attributes for an attribute-based encryption scheme based on the in-line text annotations. The method includes processing the original image content to identify image portions by: detecting user-defined selections of image regions through a graphical interface, or employing a trained neural network to automatically identify and classify sensitive objects within the images. The method includes generating one or more encrypt content requests, the one or more requests including: the identified text portions with their associated encryption attributes, the identified image portions with corresponding bounding box coordinates, and metadata specifying the encryption schemes to be applied. The method includes transmitting the encrypt content requests to a cryptographic engine via a secure communication channel. The method includes receiving, from the cryptographic engine, encrypted text content for the text portions and encrypted image content for the image portions, wherein the cryptographic engine applies an attribute-based encryption scheme to the text portions and image portions. The method includes building a partially encrypted document by: replacing original text content with masking symbols, programmatically adjusting the masking symbol width to maintain document layout and formatting, applying visual obfuscation techniques to the original image content based on sensitivity levels, embedding the encrypted text and image content as metadata within the document structure, and updating document properties to indicate the presence of encrypted content.

According to other aspects of the present disclosure, the non-transitory computer-readable medium may include one or more of the following features. The attribute-based encryption scheme may utilize a ciphertext-policy attribute-based encryption (CP-ABE) algorithm, and the encryption attributes for text portions may include: access policy expressions defining combinations of user attributes required for decryption, time-based constraints specifying validity periods for decryption keys, and hierarchical attribute structures representing organizational roles and clearance levels. Processing the original image content may further comprise: segmenting the image into multiple regions using a convolutional neural network, extracting feature vectors for each segmented region using a pre-trained deep learning model, classifying the sensitivity level of each region based on the extracted features, and generating encryption attributes for each region based on its classified sensitivity level and content type. The method may further comprise: generating a decryption key request based on authenticated user attributes; transmitting the decryption key request to a key management server; receiving a decryption key from the key management server, wherein the decryption key is derived from the user's attribute set and a master secret key; selectively decrypting portions of the document using the received decryption key; and rendering a partially decrypted version of the document with authorized content visible and unauthorized content remaining obfuscated. The cryptographic engine may implement a multi-authority attribute-based encryption scheme, and generating the encrypt content requests may further comprise: assigning each text and image portion to one or more attribute authorities based on the content type and sensitivity; generating separate encryption policies for each assigned authority; and including authority identifiers and corresponding encryption policies in the encrypt content requests.

The foregoing general description of the illustrative embodiments and the following detailed description thereof are merely exemplary aspects of the teachings of this disclosure and are not restrictive.

### BRIEF DESCRIPTION OF FIGURES

Non-limiting and non-exhaustive examples are described with reference to the following figures.
FIG. 1 illustrates a block diagram of an image confidentiality management system, according to aspects of the present disclosure.
FIG. 2 illustrates a flowchart for processing and securing image data using attribute-based encryption, according to an embodiment.
FIG. 3 illustrates a block diagram of an encryption process for securing image data, according to aspects of the present disclosure.
FIG. 4 illustrates a block diagram of an encryption process for securing image data, according to an embodiment.
FIG. 5 illustrates a block diagram of a decryption process for an image security system, according to aspects of the present disclosure.
FIG. 6 illustrates a block diagram of a processing system, according to an embodiment.
FIG. 7 illustrates a flowchart for a decryption process using Attribute-Based Encryption, according to aspects of the present disclosure.
FIG. 8 illustrates a flowchart for an image encryption process using Attribute-Based Encryption, according to an embodiment.
FIG. 9 illustrates a block diagram of a system diagram for a computing device, according to aspects of the present disclosure.
FIG. 10 illustrates a block diagram of a computer system, according to an embodiment.
FIG. 11 illustrates a flowchart for a document encryption process, according to aspects of the present disclosure.
FIG. 12 illustrates a sequence diagram for securing document content through selective encryption, according to an embodiment.
FIG. 13 illustrates a block diagram of an attribute-based encryption system for secure document handling, according to aspects of the present disclosure.
FIG. 14 illustrates a block diagram of an Attribute-Based Encryption System, according to an embodiment.
FIG. 15 illustrates a block diagram of an Integrated Access Control Policy Manager system, according to aspects of the present disclosure.
FIG. 16 illustrates a sequence diagram for a Document Generation Flow, according to an embodiment.
FIG. 17 illustrates a sequence diagram for converting a DoD Marking Classified Information Document, according to aspects of the present disclosure.
FIG. 18 illustrates a sequence diagram for decrypting an Attribute-Based Encryption encrypted document, according to an embodiment.
FIG. 19 illustrates a sequence diagram for decrypting an Attribute-Based Encryption encrypted document, according to aspects of the present disclosure.
FIG. 20 illustrates an orthogonal front view of a document with classification markings, according to an embodiment.
FIG. 21 illustrates an orthogonal front view of a spill-proof document, according to aspects of the present disclosure.
FIG. 22 illustrates an orthogonal front view of a decrypted document with selective access, according to an embodiment.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The present disclosure relates to systems and methods for securing document content using attribute-based encryption. In some aspects, a document security manager may receive a digital document containing original text content and original image content. The document security manager may process the original text content to identify text content portions. This processing may involve parsing the document to locate in-line text annotations, analyzing proximate text to determine the scope of each annotation, extracting text content within the determined scope, and determining encryption attributes for an attribute-based encryption scheme based on the in-line text annotations.

In some cases, the document security manager may process the original image content to identify image portions. This processing may involve detecting user-defined selections of image regions through a graphical interface. Alternatively, or additionally, the processing may employ a trained neural network to automatically identify and classify sensitive objects within the images.

The document security manager may generate one or more encrypt content requests. These requests may include the identified text portions with their associated encryption attributes, the identified image portions with corresponding bounding box coordinates, and metadata specifying the encryption schemes to be applied. The encrypt content requests may be transmitted to a cryptographic engine via a secure communication channel.

In some aspects, the document security manager may receive encrypted text content for the text portions and encrypted image content for the image portions from the cryptographic engine. The cryptographic engine may apply an attribute-based encryption scheme to the text portions and image portions.

The document security manager may build a partially encrypted document. This building process may involve replacing original text content with masking symbols, programmatically adjusting the masking symbol width to maintain document layout and formatting, applying visual obfuscation techniques to the original image content based on sensitivity levels, embedding the encrypted text and image content as metadata within the document structure, and updating document properties to indicate the presence of encrypted content.

In some cases, the attribute-based encryption scheme may utilize a ciphertext-policy attribute-based encryption (CP-ABE) algorithm. The encryption attributes for text portions may include access policy expressions defining combinations of user attributes required for decryption, time-based constraints specifying validity periods for decryption keys, and hierarchical attribute structures representing organizational roles and clearance levels.

The processing of original image content may involve segmenting the image into multiple regions using a convolutional neural network, extracting feature vectors for each segmented region using a pre-trained deep learning model, classifying the sensitivity level of each region based on the extracted features, and generating encryption attributes for each region based on its classified sensitivity level and content type.

In some aspects, the system may generate a decryption key request based on authenticated user attributes, transmit the decryption key request to a key management server, receive a decryption key from the key management server, selectively decrypt portions of the document using the received decryption key, and render a partially decrypted version of the document with authorized content visible and unauthorized content remaining obfuscated.

The cryptographic engine may implement a multi-authority attribute-based encryption scheme. In such cases, generating the encrypt content requests may involve assigning each text and image portion to one or more attribute authorities based on the content type and sensitivity, generating separate encryption policies for each assigned authority, and including authority identifiers and corresponding encryption policies in the encrypt content requests.

In some cases, building the partially encrypted document may involve generating a document-specific symmetric key, encrypting the symmetric key using the attribute-based encryption scheme with a master public key, encrypting the text and image portions using the symmetric key, embedding the encrypted symmetric key and the encrypted content within the document structure, and including key recovery information that allows authorized users to reconstruct decryption keys using their attribute credentials and a subset of master private key shares.

When the digital document comprises a video file, processing the original image content may involve extracting individual frames from the video file, analyzing the extracted frames to identify sensitive objects or regions, generating temporal bounding boxes to track the identified sensitive objects or regions across multiple frames, applying visual obfuscation techniques to the sensitive objects or regions within each affected frame, and reconstructing the video file with the obfuscated frames while maintaining the original video format and playback characteristics.

In some aspects, processing the original text content may involve identifying text decorations within the document, including bold, italic, underline, strikethrough, or color formatting, associating the identified text decorations with corresponding sensitivity levels or encryption attributes, and adjusting the encryption attributes for text portions based on the associated text decorations.

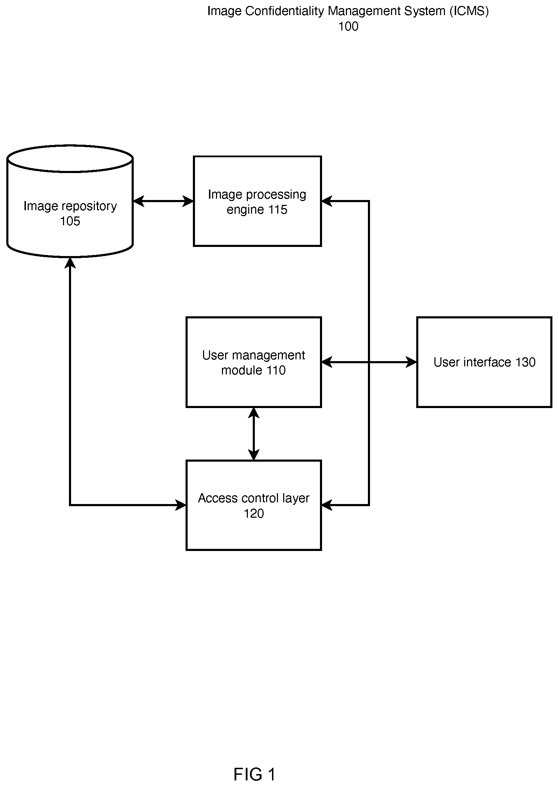

Referring to FIG. 1, an image confidentiality management system (ICMS) 100 is illustrated. The ICMS 100 may comprise several interconnected components designed to manage and process images while maintaining confidentiality. In some aspects, the ICMS 100 may include an image repository 105, which may be configured to store digital images and associated metadata defining confidential regions within said images. The image repository 105 may be represented as a cylindrical shape, indicating a storage component for images. In some cases, the image repository 105 may be bidirectionally connected to an image processing engine 115, allowing for the storage and retrieval of images.

The image processing engine 115 may be depicted as a rectangular block and may be connected to multiple components of the system. In some aspects, the image processing engine 115 may interface with the image repository 105 for image data exchange and processing. The image processing engine 115 may be configured to process said digital images, wherein said processing may include identifying confidential regions within said images based on said associated metadata and applying obfuscation to said confidential regions based on user attributes.

A user management module 110 may be included in the ICMS 100. The user management module 110 may be configured to store user profiles, each profile associated with a set of user attributes. In some cases, the user management module 110 may be connected bidirectionally to a user interface 130, facilitating user interaction and management within the system.

The user interface 130 may be represented as a separate rectangular block, providing a means for users to interact with the system 100. In some aspects, the user interface 130 may be configured to display processed images to authenticated users and allow administrators to define and modify confidential regions in said images.

An access control layer 120 may be depicted at the bottom of the diagram. The access control layer 120 may be connected to the image repository 105, the image processing engine 115, and the user management module 110. In some cases, the access control layer 120 may be configured to authenticate users and determine user access rights based on said user attributes.

The layout of the components and their connections may suggest a flow of information and control within the system. The image processing engine 115 may appear to be a central component, interacting with the image repository 105 for data and the access control layer 120 for permissions. The user management module 110 may interface with both the user interface 130 and the access control layer 120, indicating its role in managing user interactions and permissions.

In some aspects, the ICMS 100 may be designed to process and manage images while maintaining confidentiality through user management and access control mechanisms. The system may support various types of digital images and may be capable of handling a wide range of confidential information, such as personal identifiers, financial data, proprietary content, and other types of sensitive information.

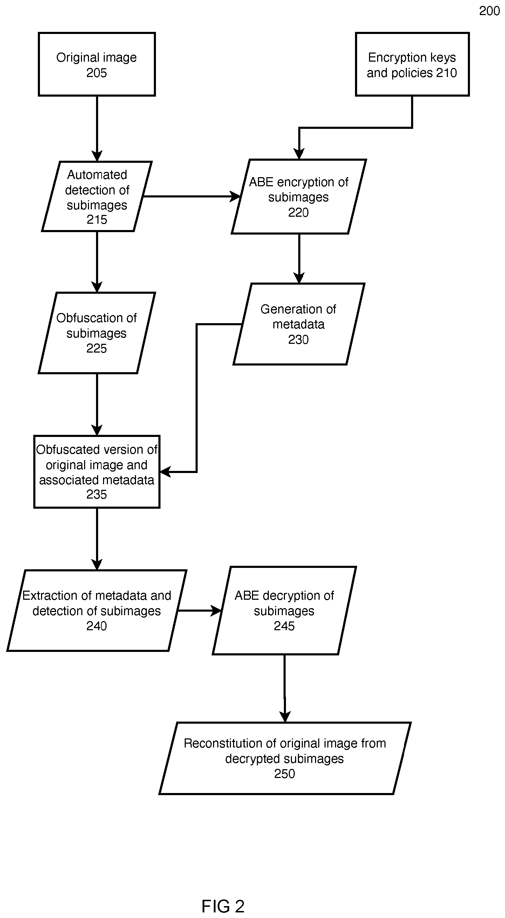

Referring to FIG. 2, a flowchart illustrates a method 200 for processing and securing image data using attribute-based encryption (ABE). In some aspects, the method 200 may begin with step 205, where an original image is input into the system. Simultaneously, step 210 may provide encryption keys and policies for the ABE process. These encryption keys and policies may define the attributes and access control rules that will be applied to the encrypted content.

The method 200 may then proceed to step 215, where automated detection of subimages within the original image occurs. This step may identify specific regions or elements within the image that require encryption. In some cases, the detection may be performed using machine learning algorithms, such as convolutional neural networks trained to recognize sensitive objects or areas within images. The detected subimages may then be passed to step 220, where ABE encryption may be applied to these subimages using the encryption keys and policies from step 210.

Following the encryption, the method 200 may move to step 225, where obfuscation of the subimages takes place. This step may involve visually obscuring the sensitive parts of the image. In some aspects, the obfuscation techniques may include blurring, pixelation, or replacement with solid colors or patterns. The degree of obfuscation may be determined based on the sensitivity level of the content and the specific requirements of the encryption policy.

Concurrently with step 225, step 230 may generate metadata associated with the encrypted subimages. This metadata may include information about the encryption scheme used, the attributes required for decryption, and other relevant details that may be necessary for later decryption and access control.

The outputs from steps 225 and 230 may be combined in step 235, which may produce an obfuscated version of the original image along with associated metadata. This step may create a visually altered image where sensitive areas are obscured, while maintaining encrypted data about these areas. In some cases, the obfuscated image may retain the overall structure and non-sensitive portions of the original image, allowing for limited viewing without compromising sensitive information.

The method 200 may then progress to step 240, where extraction of metadata and detection of subimages occurs. This step may prepare the obfuscated image and its associated data for the decryption process. The extracted information may be passed to step 245, where ABE decryption of subimages takes place. In some aspects, the decryption process may involve verifying the attributes of the user attempting to access the image against the encryption policies defined in step 210. Only users with the appropriate attributes may be able to decrypt and view the sensitive subimages.

Finally, the method 200 may conclude with step 250, which may involve the reconstitution of the original image from the decrypted subimages. This step may reconstruct the full, unobfuscated image using the decrypted data. In some cases, the reconstitution process may involve replacing the obfuscated areas in the image with their corresponding decrypted subimages, restoring the original visual content for authorized users.

The method 200 may provide a flexible approach to image security, allowing for selective encryption and decryption of image components based on user attributes and defined policies. This approach may enable fine-grained access control to sensitive image elements, while maintaining the overall structure and usability of the image for users with varying levels of authorization.

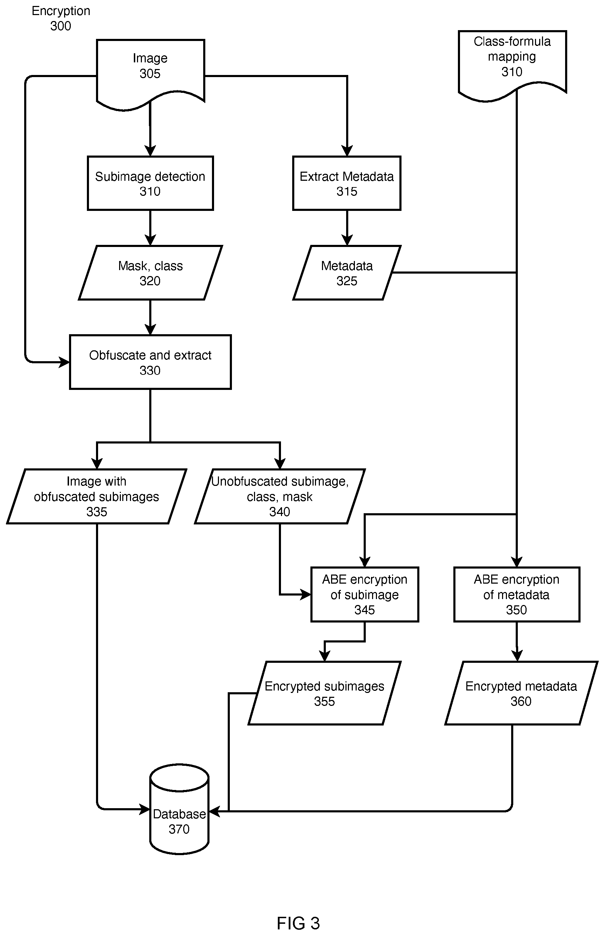

Referring to FIG. 3, an encryption process 300 for securing image data is illustrated. The encryption process 300 may comprise several interconnected components that work together to process and encrypt image content.

In some aspects, the encryption process 300 may begin with an image input 305, which may be fed into two parallel paths. One path may lead to a subimage detection module, while the other may lead to an extract metadata module 315. Simultaneously, a class-formula mapping 310 may be provided to the system. The class-formula mapping 310 may define the relationships between image classes and encryption formulas, allowing for fine-grained access control based on image content.

The subimage detection module may produce mask, class pairs 320, which may identify specific areas or objects within the image. In some cases, the subimage detection may be performed using machine learning algorithms, such as convolutional neural networks trained to recognize sensitive objects or areas within images. The extract metadata module 315 may generate metadata 325 from the input image. This metadata may include information such as image creation date, camera settings, or location data, which may be relevant for access control decisions.

The mask, class pairs 320 and the original image input 305 may then be sent to an obfuscate and extract module 330. This module may perform two main functions: it may create an image with obfuscated subimages 335, where sensitive areas are visually obscured, and it may extract unobfuscated subimage, class, mask information 340. The obfuscation techniques applied may vary based on the sensitivity level of the detected subimages and may include methods such as blurring, pixelation, or replacement with solid colors or patterns.

In some aspects, the unobfuscated subimage, class, mask 340 may be passed to an ABE encryption of subimage module 345. This module may apply attribute-based encryption to the subimages. The ABE encryption may utilize the class-formula mapping 310 to determine the appropriate encryption policy for each subimage based on its detected class. Similarly, the metadata 325 may be processed by an ABE encryption of metadata module 350. This separate encryption of metadata may allow for granular access control over different aspects of the image information.

The outputs of these encryption modules may be encrypted subimages 355 and encrypted metadata 360, respectively. In some cases, the encryption may be performed using a multi-authority ABE scheme, where different attributes or policies may be managed by separate authorities, allowing for more complex and flexible access control structures.

These encrypted components, along with the image with obfuscated subimages 335, may then be stored in a database 370. The database 370 may be a secure storage system capable of handling encrypted data and associated access policies. In some implementations, the database 370 may be a distributed system, ensuring redundancy and high availability of the encrypted image data.

The encryption process 300 may maintain a balance between securing sensitive information and preserving the overall structure and usability of the image. The image with obfuscated subimages 335 may be used for general viewing, while the encrypted subimages 355 and encrypted metadata 360 may ensure that sensitive details are only accessible to authorized users with the appropriate attributes or permissions.

In some aspects, the encryption process 300 may include additional steps for key management and policy updates. For example, the system may periodically update the class-formula mapping 310 to reflect changes in security policies or to address newly identified sensitive image classes. The system may also implement key rotation mechanisms to enhance long-term security of the encrypted data.

The encryption process 300 may be designed to handle various types of images, including photographs, medical images, satellite imagery, or scanned documents. The specific implementation of each module within the process may be tailored to the particular requirements of the image type and the security needs of the organization using the system.

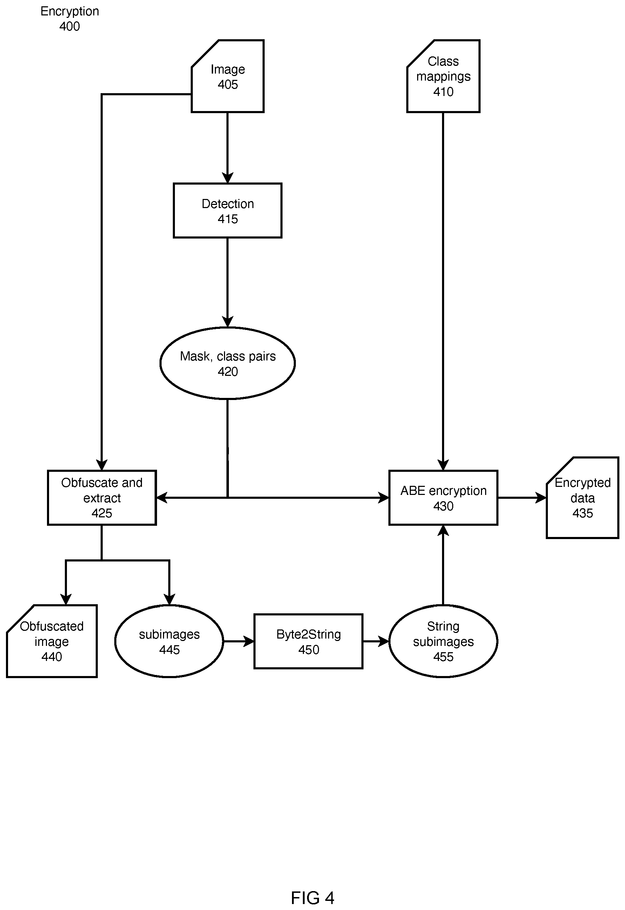

Referring to FIG. 4, an encryption process 400 for securing image data is illustrated. The encryption process 400 may begin with an image input 405, which may be processed through a detection module 415. In some aspects, the detection module 415 may employ advanced image processing techniques to identify and classify sensitive content within the image.

The detection module 415 may utilize a convolutional neural network to segment the image input 405 into multiple regions. This segmentation process may allow for fine-grained analysis of different parts of the image. In some cases, the convolutional neural network may be trained on a diverse dataset of images containing various types of sensitive information, enabling it to recognize complex patterns and objects.

Following segmentation, the detection module 415 may extract feature vectors for each segmented region using a pre-trained deep learning model. These feature vectors may capture high-level representations of the visual content within each region. The pre-trained model may be based on architectures such as ResNet, Inception, or EfficientNet, which have demonstrated strong performance in image recognition tasks.

The detection module 415 may then classify the sensitivity level of each region based on the extracted features. This classification process may involve comparing the extracted features against a database of known sensitive content types or applying machine learning algorithms to determine the likelihood of sensitive information being present. In some aspects, the classification may assign multiple sensitivity levels to a single region, allowing for nuanced handling of complex visual information.

Based on the classified sensitivity levels and content types, the detection module 415 may generate encryption attributes for each region. These attributes may be used to determine the appropriate encryption policies and obfuscation techniques to be applied. The output of the detection module 415 may be mask class pairs 420, which represent the detected sensitive regions along with their associated classification and encryption attributes.

In some cases, the image input 405 may be a video file. When processing video content, the encryption process 400 may involve additional steps to handle the temporal nature of the data. The detection module 415 may extract individual frames from the video file at regular intervals or at key points determined by scene change detection algorithms.

The extracted frames may be analyzed using the same convolutional neural network and feature extraction techniques applied to static images. However, the detection module 415 may also incorporate temporal information to improve the accuracy of sensitive object or region identification. This may involve using recurrent neural networks or 3D convolutional networks that can capture motion and temporal dependencies across multiple frames.

Once sensitive objects or regions are identified in the video frames, the detection module 415 may generate temporal bounding boxes to track these elements across multiple frames. These temporal bounding boxes may be represented as a series of spatial coordinates coupled with frame numbers or timestamps, allowing for consistent tracking of sensitive content throughout the video.

The obfuscate extract module 425 may apply visual obfuscation techniques to the sensitive objects or regions within each affected frame. These techniques may include blurring, pixelation, or replacement with solid colors or patterns. The level and type of obfuscation applied may vary based on the sensitivity classification of each region.

In reconstructing the video file with obfuscated frames, the encryption process 400 may maintain the original video format and playback characteristics. This may involve careful handling of video codec parameters, frame rates, and metadata to ensure that the obfuscated video remains compatible with standard video players and streaming protocols.

The encryption process 400 may also include steps to handle audio content associated with the video. In some aspects, sensitive audio information may be detected and obfuscated using techniques such as audio redaction or replacement with neutral tones.

The class mappings 410 provided to the system may include specific policies for handling video content, potentially defining different encryption and obfuscation rules for various types of motion or temporal patterns in addition to static visual elements.

The ABE encryption module 430 may apply attribute-based encryption to the processed image or video data, utilizing the encryption attributes generated during the detection and classification stages. This encryption may be applied to individual regions of static images or to temporal segments of video content, allowing for fine-grained access control based on user attributes and the sensitivity of different parts of the visual data.

The encryption process 400 may output encrypted data 435 and an obfuscated image or video 440, providing a balance between securing sensitive content and maintaining the overall structure and usability of the visual information for users with varying levels of access rights.

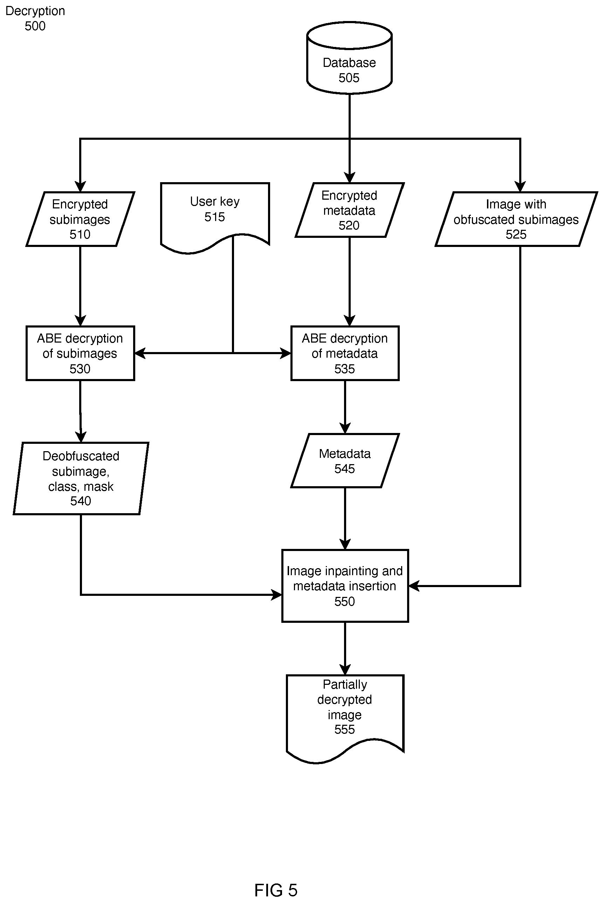

Referring to FIG. 5, a decryption process 500 for an image security system is illustrated. The decryption process 500 may comprise several interconnected components that work together to decrypt and reconstruct partially encrypted images.

In some aspects, the decryption process 500 may begin with retrieving encrypted data from a database 505. The database 505 may store three types of data: encrypted subimages 510, encrypted metadata 520, and an image with obfuscated subimages 525. These components may represent the encrypted and obfuscated parts of the original image.

A user key 515 may be provided to the system, which may be used in both the ABE decryption of subimages 530 and the ABE decryption of metadata 535. These decryption modules may use Attribute-Based Encryption (ABE) techniques to selectively decrypt the encrypted components based on the user's attributes encoded in the user key 515.

In some cases, the decryption process 500 may involve generating a decryption key request based on authenticated user attributes. This request may be transmitted to a key management server, which may be a separate entity from the components shown in FIG. 5. The key management server may process the request and return a decryption key derived from the user's attribute set and a master secret key.

The ABE decryption of subimages 530 may process the encrypted subimages 510, producing deobfuscated subimage 540. Simultaneously, the ABE decryption of metadata 535 may process the encrypted metadata 520, resulting in decrypted metadata 545. The decryption process may selectively decrypt portions of the document using the received decryption key, ensuring that only authorized content is made visible while unauthorized content remains obfuscated.

In some aspects, the system may employ an image inpainting and metadata insertion module 550. This module may combine three inputs: the deobfuscated subimage 540, the decrypted metadata 545, and the image with obfuscated subimages 525. The image inpainting process may involve reconstructing the original image by replacing the obfuscated areas with the decrypted subimages and incorporating the decrypted metadata.

The final output of the decryption process 500 may be a partially decrypted image 555. This image may represent the result of the decryption process, where portions of the original image have been reconstructed based on the user's decryption privileges as determined by their user key 515. The partially decrypted image 555 may be rendered with authorized content visible and unauthorized content remaining obfuscated.

In some cases, the decryption process 500 may incorporate additional security measures. For example, the system may implement a secure viewing environment that prevents unauthorized copying, printing, or screen capture of decrypted content. This environment may include features such as dynamic watermarking of displayed content with the user's identification and access timestamp, disabling system clipboard functionality within the secure viewer, and implementing secure printing protocols that require additional authentication and logging.

The decryption process 500 may also maintain detailed logs of each decryption attempt and access to encrypted portions of the document. These logs may include user identification, timestamp of the decryption attempt, specific portions of the document accessed, user attributes used for decryption, and the success or failure of the decryption attempt. Such logging mechanisms may be crucial for auditing purposes, detecting potential security breaches, and ensuring compliance with data protection regulations.

In some aspects, the decryption process 500 may support hierarchical attribute structures representing organizational roles and clearance levels. This may allow for more complex access control policies, where users with higher-level attributes may be granted access to a broader range of encrypted content within the document.

The system may also implement time-based constraints on decryption keys, specifying validity periods for decryption. This feature may allow for temporary access grants or automatic revocation of access rights after a specified period, enhancing the overall security of the encrypted content.

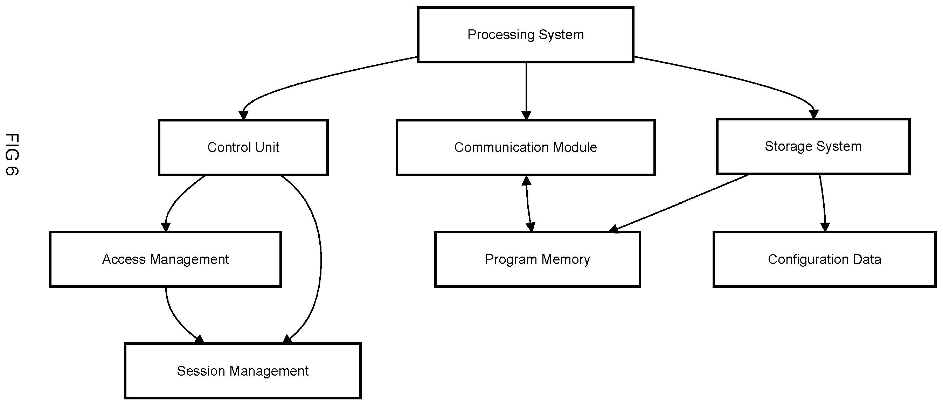

Referring to FIG. 6, a block diagram of a processing system is illustrated. The processing system may comprise several interconnected components organized in a hierarchical structure. In some aspects, the processing system may be connected to three main components: a Control Unit, a Communication Module, and a Storage System.

The Control Unit may be linked to two sub-components: Access Management and Session Management. These components may interact with each other, suggesting a flow of information between access control and session handling. In some cases, the Access Management component may be responsible for implementing attribute-based access control policies, determining user permissions based on their attributes and the sensitivity levels of different document portions.

The Communication Module may be connected to a Program Memory component. This connection may indicate that the Communication Module may utilize or manage program data stored in the memory. In some aspects, the Communication Module may handle secure communication channels for transmitting encrypted content requests and receiving encrypted data from the cryptographic engine.

The Storage System may be connected to two sub-components: Program Memory and Configuration Data. The Program Memory may be shared between the Communication Module and the Storage System, implying a potential for data exchange or shared access to program information. In some cases, the Program Memory may store encryption and decryption algorithms, as well as machine learning models used for sensitive object detection in images.

The Configuration Data component may be exclusively connected to the Storage System, suggesting it may store system settings or parameters. This may include encryption policies, attribute mappings, and other configuration details necessary for the attribute-based encryption system.

The layout of the diagram may imply a modular design where different functions are separated into distinct units. This modular approach may allow for flexibility in updating or modifying specific components of the system without affecting others. For example, encryption policies stored in the Configuration Data component may be updated independently of the encryption algorithms stored in the Program Memory.

The Processing System may appear to oversee and coordinate the activities of the Control Unit, Communication Module, and Storage System. In some aspects, the Processing System may manage the flow of data between these components, ensuring that sensitive information is properly handled and secured throughout the document encryption and decryption processes.

The system's structure may suggest that it may be designed to handle tasks related to data processing, access control, communication, and data storage. The presence of Session Management and Access Management components may indicate that the system may deal with user interactions or networked operations, potentially managing multiple concurrent user sessions with varying levels of access rights.

In some cases, the Processing System may implement a multi-authority attribute-based encryption scheme. This may involve coordinating with multiple attribute authorities, each responsible for managing a subset of attributes used in the encryption policies. The Communication Module may handle interactions with these external attribute authorities, while the Access Management component may integrate the attribute information into the overall access control decisions.

The system may also support dynamic policy updates. For example, the Configuration Data component may store time-based constraints for decryption keys. The Access Management component may periodically check these constraints and update user access rights accordingly, potentially revoking access to certain document portions when key validity periods expire.

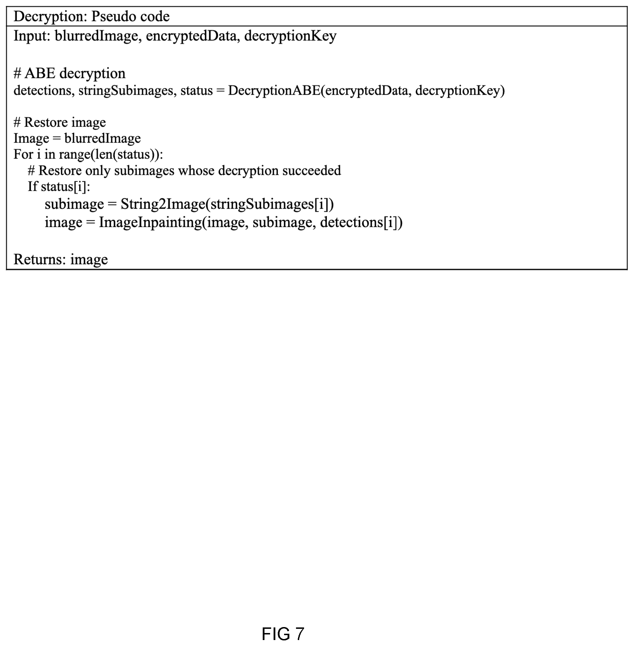

Referring to FIG. 7, a flowchart illustrates a decryption process using Attribute-Based Encryption (ABE). In some aspects, the process may begin with input parameters of blurredImage, encryptedData, and decryptionKey. These input parameters may represent the obfuscated image, the encrypted sensitive portions of the image, and the user's decryption key, respectively.

The first step in the decryption process may involve ABE decryption. In some cases, a DecryptionABE function may take encryptedData and decryptionKey as inputs to produce detections, stringSubimages, and status. The detections may represent the locations and types of sensitive regions within the image. The stringSubimages may be the decrypted versions of the sensitive regions, still in a string format. The status may indicate whether the decryption was successful for each subimage.

Following the ABE decryption, the process may move to restore the image. In some aspects, this restoration process may begin by initializing an Image variable with the blurredImage. This step may create a base image on which the decrypted subimages will be overlaid.

The decryption process may then enter a loop that iterates through the range of status length. This loop may allow the system to process each subimage individually. For each iteration, the process may check if the decryption succeeded for that particular subimage. This check may be crucial for maintaining the security of the system, as it ensures that only successfully decrypted subimages are revealed.

If the decryption for a subimage is successful, the process may convert the string subimage back to an image format. In some cases, this conversion may be performed using a String2Image function. This function may take the decrypted string representation of the subimage and reconstruct it into a visual format that can be inserted into the main image.

After converting the subimage, the process may use an ImageInpainting function to restore the subimage in the main image. This function may take the current image, the converted subimage, and the corresponding detection as inputs. The ImageInpainting function may carefully blend the decrypted subimage into the main image, ensuring a seamless integration that maintains the overall visual integrity of the image.

In some aspects, if the decryption for a particular subimage fails, that region of the image may remain blurred or obfuscated. This selective decryption based on the success status may allow for fine-grained access control, where users may only see the portions of the image for which they have the necessary decryption attributes.

The process may conclude by returning the restored image. This final image may be a combination of the original blurred image with successfully decrypted subimages inserted in their appropriate locations. In some cases, the restored image may contain a mix of clear and obfuscated regions, depending on the user's decryption privileges.

The decryption process illustrated in FIG. 7 may provide a structured approach to selectively decrypt and restore portions of an image that were previously encrypted using ABE. This process may maintain the integrity of successfully decrypted regions while preserving the blurred state of areas that could not be decrypted, thereby ensuring that sensitive information remains protected from unauthorized access.

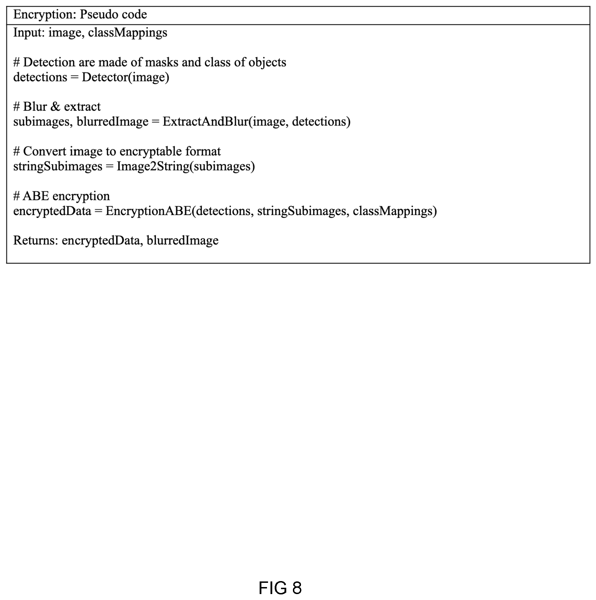

Referring to FIG. 8, a flowchart illustrates an image encryption process using Attribute-Based Encryption (ABE). In some aspects, the process may begin with input parameters of an image and classMappings. The classMappings may define relationships between image classes and encryption policies, allowing for fine-grained access control based on image content.

The flowchart may then proceed through several steps to encrypt sensitive portions of the image. In some cases, the first step may involve detection of masks and class of objects within the image. This detection may be performed by a Detector function, which may take the input image and produce detections. The Detector function may employ advanced image processing techniques, such as convolutional neural networks or other machine learning algorithms, to identify and classify sensitive content within the image.

Following the detection step, the process may move to a blur and extract step. In some aspects, this step may use an ExtractAndBlur function, taking the original image and the detections as inputs. The function may output subimages and a blurredImage. The ExtractAndBlur function may apply various obfuscation techniques to the sensitive regions identified in the detection step. These techniques may include Gaussian blurring, pixelation, or more advanced methods such as inpainting or content-aware fill algorithms.

The third step in the process may involve converting the subimages to an encryptable format. In some cases, this conversion may be performed using an Image2String function, which may convert the subimages to stringSubimages. This conversion step may be necessary to prepare the image data for the attribute-based encryption process, as many encryption algorithms operate on string or binary data rather than raw image data.

The final processing step may be the ABE encryption. This step may use an EncryptionABE function, taking as inputs the detections, stringSubimages, and classMappings. The EncryptionABE function may apply attribute-based encryption to the sensitive portions of the image, using the classMappings to determine the appropriate encryption policy for each subimage based on its detected class. In some aspects, the ABE encryption may involve complex mathematical operations such as bilinear pairings and may utilize advanced cryptographic primitives to ensure the security and fine-grained access control of the encrypted data.

The process may conclude by returning two outputs: the encryptedData and the blurredImage. The encryptedData may represent the encrypted sensitive portions of the image, while the blurredImage may be a visually obscured version of the original image where sensitive regions have been blurred or otherwise obfuscated.

In some cases, the encryption process may include additional steps for key management and policy updates. For example, the system may periodically update the classMappings to reflect changes in security policies or to address newly identified sensitive image classes. The system may also implement key rotation mechanisms to enhance the long-term security of the encrypted data.

The encryption process illustrated in FIG. 8 may demonstrate a sequential approach to selectively encrypting sensitive portions of an image while maintaining a blurred version of the full image. The use of ABE may allow for fine-grained access control to the encrypted image data based on user attributes defined in the classMappings. This approach may provide a balance between security and usability, allowing authorized users to access sensitive image content while protecting it from unauthorized viewers.

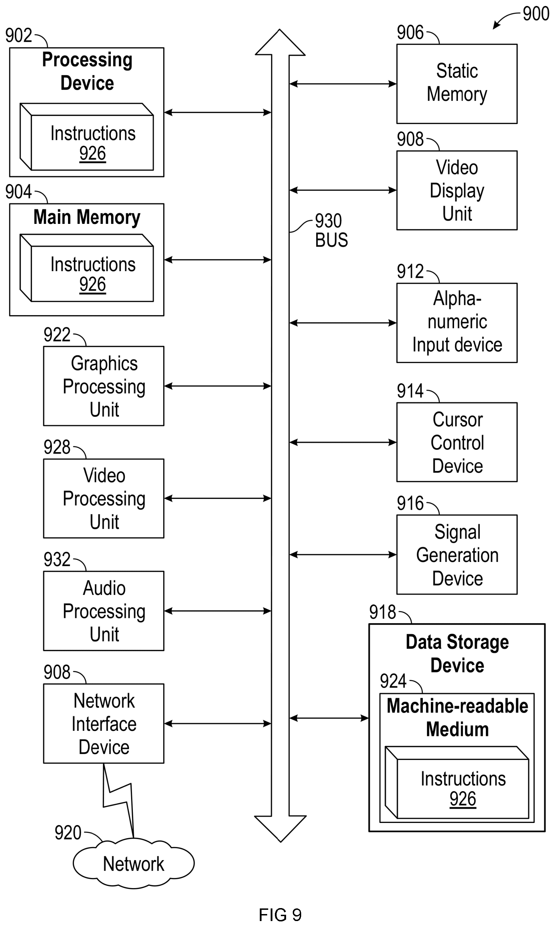

Referring to FIG. 9, a system diagram 900 for a computing device is illustrated. The system diagram 900 may comprise several interconnected components centered around a bus 930. In some aspects, the processing device 902 may be connected to the bus 930 and may serve as the central processing unit of the system. The processing device 902 may contain instructions 926, which may be executable code for implementing the attribute-based encryption system for document security.

The main memory 904 may be linked to the bus 930, providing primary storage for the system. In some cases, the main memory 904 may also contain instructions 926, allowing for quick access to the code implementing the document security methods. The system may include static memory 906 connected to the bus 930, which may provide additional storage capabilities for the attribute-based encryption algorithms and associated data structures.

A video display unit 908 may be connected to the bus 930, allowing for visual output from the system. This may be utilized for displaying partially decrypted documents or user interfaces for managing document security policies. User input may be facilitated through an alphanumeric input device 912 and a cursor control device 914, both connected to the bus 930. These components may allow users to interact with the document security system, inputting encryption attributes or selecting image regions for encryption.

The system may incorporate specialized processing units for various tasks related to attribute-based encryption and image processing. A graphics processing unit 922 may be connected to the bus 930 for handling graphical computations, which may be particularly useful for image segmentation and feature extraction in the document security process. A video processing unit 928 may be included for video-related tasks, potentially handling encryption and decryption of video content within documents. An audio processing unit 932 may manage audio processing, which may be relevant for securing audio components of multimedia documents.

For data storage, the system may include a data storage device 918. Within this device may be a machine-readable medium 924, which may also contain instructions 926. This may provide non-volatile storage for the system's software and data, including encrypted document content and associated metadata.

The system may communicate with external networks through a network interface device 908, which may be connected to both the bus 930 and an external network 920. This may allow for secure transmission of encrypted documents and communication with remote key management servers or attribute authorities in a distributed attribute-based encryption system.

The bus 930 may serve as the central connection point for all components, facilitating data transfer and communication between the various parts of the system. This interconnected architecture may support the implementation of the attribute-based encryption system by allowing efficient data flow between components during encryption, decryption, and document processing operations.

In some aspects, the method for securing document content may be implemented as instructions 926 stored on a non-transitory computer-readable medium, such as the machine-readable medium 924 within the data storage device 918. These instructions 926, when executed by the processing device 902, may cause the computing device to perform the various steps of the document security process, including receiving digital documents, processing text and image content, generating encryption requests, and building partially encrypted documents.

The system architecture illustrated in FIG. 9 may provide a flexible and powerful platform for implementing complex attribute-based encryption schemes. The combination of general-purpose processing capabilities with specialized units for graphics, video, and audio processing may allow for efficient handling of diverse document types and content formats within the security framework.

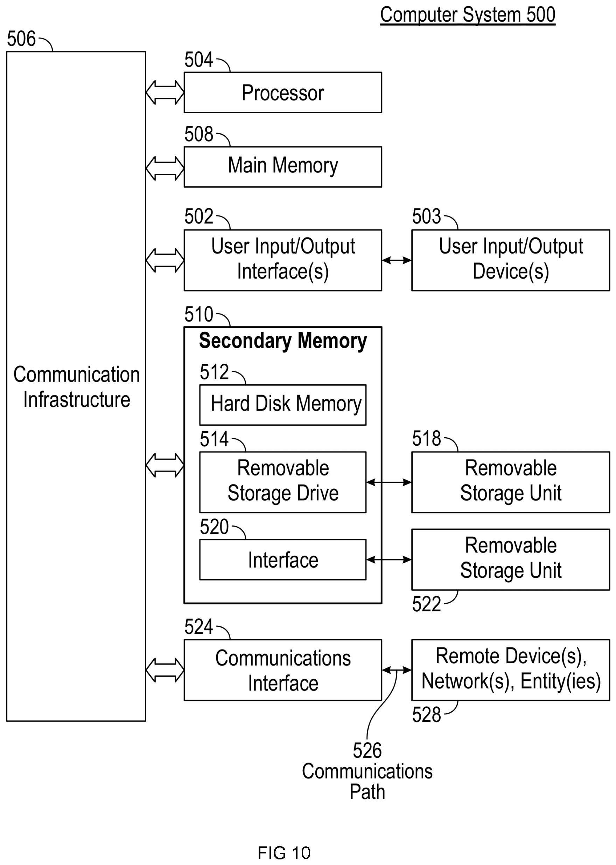

Referring to FIG. 10, a block diagram of a computer system 500 is illustrated. The system 500 may comprise several interconnected components centered around a communication infrastructure 506, which may facilitate communication between the various elements.

The processor 504 may be connected to the communication infrastructure 506 and may serve as the central processing unit of the system. In some aspects, the processor 504 may execute instructions for implementing the attribute-based encryption and decryption processes described herein.

Main memory 508 may also be linked to the communication infrastructure 506, providing primary storage for the system. In some cases, the main memory 508 may store encryption keys, user attributes, and temporary data used during the document security operations.

User interaction may be facilitated through a user input/output interface 502 connected to the communication infrastructure 506. This interface may be further connected to a user input/output device 503, allowing for direct user interaction with the system. In some aspects, the user input/output device 503 may enable users to select image regions for encryption or input encryption attributes.

The system 500 may include a secondary memory 510 connected to the communication infrastructure 506, which may provide additional storage capabilities. The secondary memory 510 may comprise a hard disk memory 512 for long-term data storage. In some cases, the hard disk memory 512 may store encrypted documents, encryption policies, and audit logs.

A removable storage drive 514 may also be part of the secondary memory 510, allowing for the use of removable storage units 518 and 522. An interface 520 within the secondary memory 510 may provide connectivity to these removable storage units. In some aspects, the removable storage units may be used to securely transfer encrypted documents or encryption keys between different systems.

External communication may be enabled through a communications interface 524, which may be connected to the communication infrastructure 506. The communications interface 524 may allow the system to interact with remote devices, networks, or entities 528 via a communications path 526. In some cases, this may facilitate secure communication with external key management servers or attribute authorities in a distributed attribute-based encryption system.

The communication infrastructure 506 may serve as the central connection point for all components, facilitating data transfer and communication between the various parts of the system. This architecture may allow for efficient processing, storage, user interaction, and network communication within the computer system 500.

In some aspects, the system 500 may implement a multi-authority attribute-based encryption scheme. The processor 504 may coordinate with multiple attribute authorities, each responsible for managing a subset of attributes used in the encryption policies. The communications interface 524 may handle interactions with these external attribute authorities, while the user input/output interface 502 may integrate the attribute information into the overall access control decisions.

The system 500 may also support dynamic policy updates. For example, the secondary memory 510 may store time-based constraints for decryption keys. The processor 504 may periodically check these constraints and update user access rights accordingly, potentially revoking access to certain document portions when key validity periods expire.

In some cases, the computer system 500 may be configured to handle video content within documents. The processor 504 may extract individual frames from video files, analyze the extracted frames to identify sensitive objects or regions, and generate temporal bounding boxes to track these elements across multiple frames. The system may then apply visual obfuscation techniques to the sensitive objects or regions within each affected frame and reconstruct the video file with obfuscated frames while maintaining the original video format and playback characteristics.

The computer system 500 may provide a flexible and powerful platform for implementing the attribute-based encryption system for document security. Its modular design may allow for updates or modifications to specific components without affecting others, enabling the system to adapt to evolving security requirements and encryption technologies.

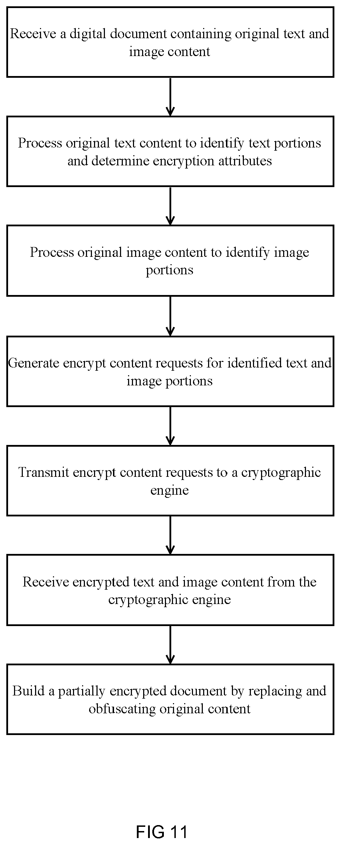

Referring to FIG. 11, a flowchart illustrates a document encryption process. In some aspects, the process may begin with receiving a digital document containing original text content and original image content. The digital document may be received by a document security manager implemented on a computing device.

The process may then move to processing the original text content to identify text content portions. In some cases, this processing may involve parsing the document to locate in-line text annotations. The document security manager may analyze proximate text to determine the scope of each annotation. Text content within the determined scope may be extracted. Based on the in-line text annotations, the document security manager may determine encryption attributes for an attribute-based encryption scheme.

In parallel or sequentially, the process may involve processing the original image content to identify image portions. This step may be accomplished through multiple methods. In some aspects, the document security manager may detect user-defined selections of image regions through a graphical interface. In other cases, a trained neural network may be employed to automatically identify and classify sensitive objects within the images.

Following the processing of text and image content, the document security manager may generate one or more encrypt content requests. These requests may include the identified text portions with their associated encryption attributes. The requests may also contain the identified image portions with corresponding bounding box coordinates. Additionally, metadata specifying the encryption schemes to be applied may be included in these requests.

The encrypt content requests may then be transmitted to a cryptographic engine via a secure communication channel. In some cases, the cryptographic engine may be a separate component from the document security manager, potentially residing on a different computing device or server.

After transmission, the document security manager may receive encrypted text content for the text portions and encrypted image content for the image portions from the cryptographic engine. The cryptographic engine may apply an attribute-based encryption scheme to the text portions and image portions.

The final step in the process may involve building a partially encrypted document. This step may comprise several sub-steps. The document security manager may replace original text content with masking symbols. To maintain document layout and formatting, the width of these masking symbols may be programmatically adjusted.

For the image content, the document security manager may apply visual obfuscation techniques to the original image content. The level of obfuscation may be based on predetermined sensitivity levels associated with different types of image content or regions.

The encrypted text and image content may be embedded as metadata within the document structure. This approach may allow the document to retain its original format while securely storing the encrypted content.

Lastly, the document security manager may update document properties to indicate the presence of encrypted content. This step may be crucial for alerting users and systems about the special handling required for this partially encrypted document.

In some aspects, the document encryption process may include additional steps for handling different types of digital content, such as audio or video embedded within the document. The process may also incorporate mechanisms for version control and change tracking to maintain a history of encryption operations performed on the document.

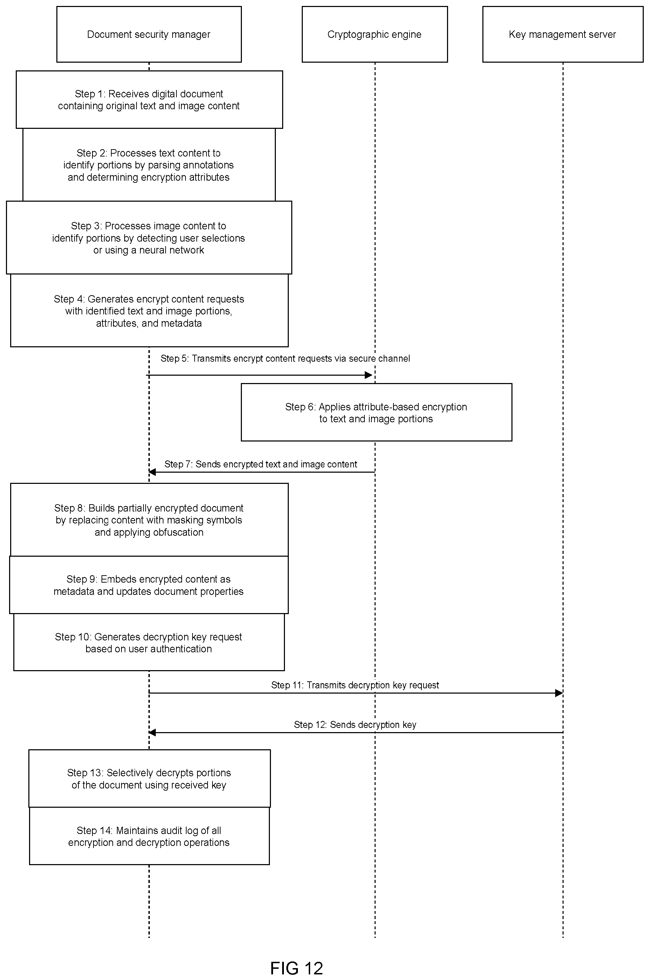

Referring to FIG. 12, a sequence diagram illustrates the process of securing document content through selective encryption, involving three main components: the Document Security Manager, the Cryptographic Engine, and the Key Management Server.

In some aspects, the process may begin with the Document Security Manager receiving a digital document containing original text and image content in Step 1. The Document Security Manager may then process the text content to identify portions by parsing annotations and determining encryption attributes in Step 2. This step may involve analyzing proximate text to determine the scope of each annotation and extracting text content within the determined scope.

Step 3 may involve processing the image content to identify portions by detecting user selections or using a neural network. In some cases, the neural network may be trained to automatically identify and classify sensitive objects within the images.

In Step 4, the Document Security Manager may generate encrypt content requests with the identified text and image portions, attributes, and metadata. These requests may be transmitted to the Cryptographic Engine via a secure channel in Step 5. The secure communication channel may employ various encryption protocols to ensure the confidentiality and integrity of the transmitted data.

The Cryptographic Engine may apply attribute-based encryption to the text and image portions in Step 6. This encryption process may utilize complex mathematical operations and cryptographic primitives to ensure the security and fine-grained access control of the encrypted data. In Step 7, the Cryptographic Engine may send the encrypted text and image content back to the Document Security Manager. The encrypted content returned by the Cryptographic Engine may include both the encrypted text portions and the encrypted image portions, each processed according to the attribute-based encryption scheme.

Steps 8 and 9 may involve the Document Security Manager building a partially encrypted document. This process may include replacing content with masking symbols, applying obfuscation techniques, embedding the encrypted content as metadata, and updating document properties. The masking symbols may be programmatically adjusted to maintain the document's layout and formatting.

In Step 10, the Document Security Manager may generate a decryption key request based on user authentication. This request may be transmitted to the Key Management Server in Step 11. The Key Management Server may respond by sending the decryption key in Step 12. The decryption key may be derived from the user's attribute set and a master secret key.

Using the received key, the Document Security Manager may selectively decrypt portions of the document in Step 13. This selective decryption process may ensure that users can only access the parts of the document for which they have the necessary attributes or permissions.

Finally, in Step 14, the Document Security Manager may maintain an audit log of all encryption and decryption operations performed on the document. This logging mechanism may be crucial for security audits and compliance with data protection regulations.

In some cases, the sequence diagram may incorporate additional steps for handling different types of digital content, such as audio or video embedded within the document. The process may also include mechanisms for policy updates and key rotation to enhance the long-term security of the encrypted data.

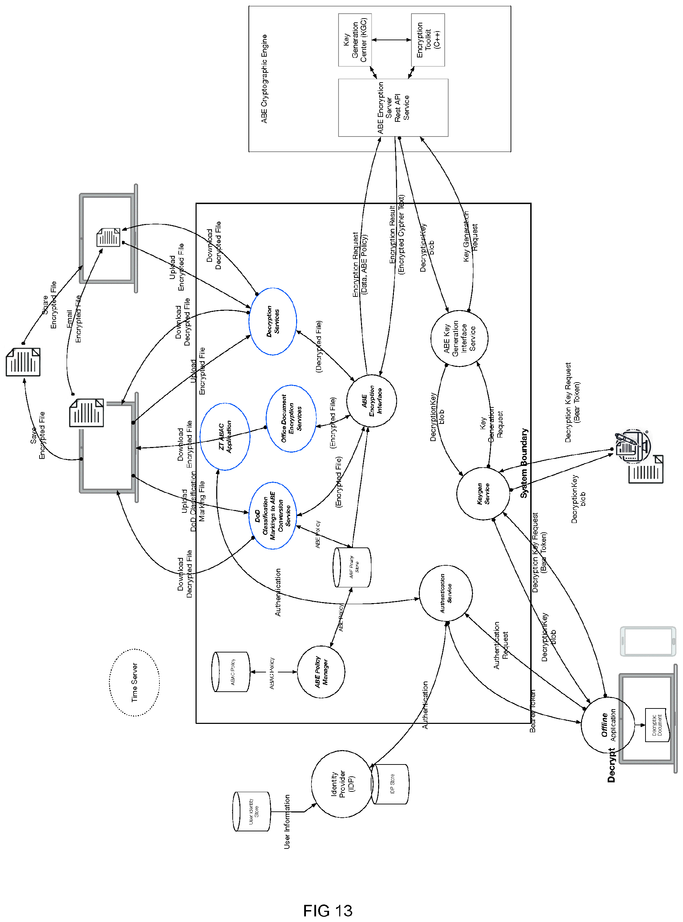

Referring to FIG. 13, an attribute-based encryption (ABE) system for secure document handling and encryption is illustrated. The system may comprise several interconnected components that work together to provide granular control over document encryption and access.

In some aspects, the system may include a document security manager and a cryptographic engine as core components for implementing attribute-based encryption of documents. The document security manager may be configured to receive documents, identify security attributes, and coordinate the encryption and decryption processes. The cryptographic engine may be responsible for performing the actual encryption and decryption operations based on the specified attributes and policies.

The attribute-based encryption scheme may utilize a ciphertext-policy attribute-based encryption (CP-ABE) algorithm. In some cases, the CP-ABE algorithm may allow for the creation of complex access policies that determine who can access specific portions of encrypted documents. These access policies may be expressed as Boolean formulas involving user attributes, such as organizational role, security clearance level, or project affiliation.

In some aspects, the cryptographic engine may implement a multi-authority attribute-based encryption scheme. This approach may allow for different authorities to manage distinct sets of attributes, potentially enhancing the flexibility and scalability of the system. For example, one authority may manage attributes related to organizational structure, while another may handle attributes associated with security clearance levels.

The system may utilize specific user attributes to control access to encrypted document content. These attributes may include, but are not limited to, security clearance level, organizational affiliation, or job role. For example, a user with a "Top Secret" clearance level may be granted access to highly classified portions of a document, while a user with a lower clearance level may only see unclassified sections.

In some implementations, the system may include a Zero Trust Attribute-Based Access Control (ZT ABAC) Application. This application may serve as an interface between various services within the system, coordinating authentication, policy enforcement, and access control decisions. The ZT ABAC Application may implement a zero trust security model, where trust is never assumed and must be continuously verified based on user attributes and context.

A DoD Classification Marking to ABE Conversion Service may be incorporated into the system. This service may be capable of processing documents with traditional Department of Defense (DoD) classification markings and converting them into the attribute-based encryption scheme. For instance, a document section marked as "SECRET" may be automatically assigned appropriate ABE attributes that restrict access to users with the necessary security clearance.

The system may also include an ABE Policy Manager that interfaces with both an ABAC Policy store and an ABE Policy store. This component may be responsible for managing and enforcing access control policies across the system. The ABAC Policy store may contain attribute-based access control policies that define rules for resource access based on user attributes. The ABE Policy store may hold specific encryption policies that determine how different portions of documents should be encrypted based on their sensitivity and classification.

In some cases, the ABE Policy Manager may dynamically combine policies from both stores to create comprehensive encryption and access control rules. For example, it may use ABAC policies to determine which users can access a document, and then apply ABE policies to encrypt specific sections of the document based on the user's attributes.

The system may incorporate an Identity Provider (IdP) that manages user information and authentication. This component may work in conjunction with an Authentication Service to handle authentication requests and provide bearer tokens. These tokens may contain encrypted information about the user's attributes, which can be used by other components of the system to make access control decisions.

An ABE Encryption Interface may be central to the encryption process, receiving encryption requests from the document security manager and applying the appropriate ABE policies. This interface may communicate with the ABE Cryptographic Engine, which may contain the core algorithms for attribute-based encryption.

In some aspects, the system may employ a hybrid encryption approach. A document-specific symmetric key may be generated and used to encrypt the actual document content. This symmetric key may then be encrypted using the attribute-based encryption scheme with a master public key. The encrypted symmetric key and the encrypted content may be embedded within the document structure. This approach may combine the efficiency of symmetric encryption for large documents with the fine-grained access control provided by ABE.

The system may include key recovery information that allows authorized users to reconstruct decryption keys using their attribute credentials and a subset of master private key shares. This feature may provide a mechanism for key recovery in case of lost or compromised user keys, while still maintaining the security properties of the ABE scheme.

For decryption, the system may include a Decryption Services component that interfaces with an ABE Key Generation Interface Service. This service may communicate with a Keygen Service to generate the necessary decryption keys based on the user's attributes and the document's encryption policy.

The system may also feature an Offline Decrypt Application, allowing for decryption of documents on various devices including laptops and mobile phones, even when not connected to the network. This may enhance usability while maintaining security by enforcing attribute-based access control even in offline scenarios. In some cases, the Offline Decrypt Application may store a local copy of the user's attributes and a subset of the ABE policies, allowing it to make access control decisions and perform decryption operations without requiring a constant network connection.

A Time Server may be incorporated into the system, suggesting that time-based elements may play a role in the encryption or access control process. For instance, certain documents or sections may have time-limited access, requiring users to not only possess the correct attributes but also attempt access within a specified time window. In some aspects, the Time Server may provide a trusted source of time for implementing time-based access controls. Documents or specific sections within documents may have associated time windows during which they can be accessed. The system may check the current time against these windows when determining whether to grant access to encrypted content.

The system may implement a Zero Trust Attribute-Based Access Control (ZT ABAC) Application that serves as an interface between various services within the system, coordinating authentication, policy enforcement, and access control decisions. This application may implement a zero trust security model, where trust is never assumed and must be continuously verified based on user attributes and context. In some cases, the ZT ABAC Application may evaluate each access request independently, regardless of the user's previous authentication status or network location.

The overall architecture of the ABE system may emphasize the flow of data and requests between components, illustrating how encrypted files are processed, how keys are generated and managed, and how authentication and decryption are handled across the system. This design may allow for flexible, granular, and secure control over sensitive information within documents, adapting to the specific security needs of organizations dealing with classified or sensitive data.

In some aspects, the system may employ advanced analytics and machine learning techniques to identify unusual access patterns or potential insider threats. By analyzing audit logs and user behavior, the system may detect anomalous access attempts or data exfiltration activities, identify users accessing an unusually high volume of classified information, and flag suspicious patterns of document decryption or sharing.

The system may also support secure collaboration features for classified documents. These features may include real-time co-authoring with dynamic access control based on each user's attributes, secure commenting and annotation capabilities that respect classification levels, and version control and change tracking that maintain the security and integrity of all document versions.

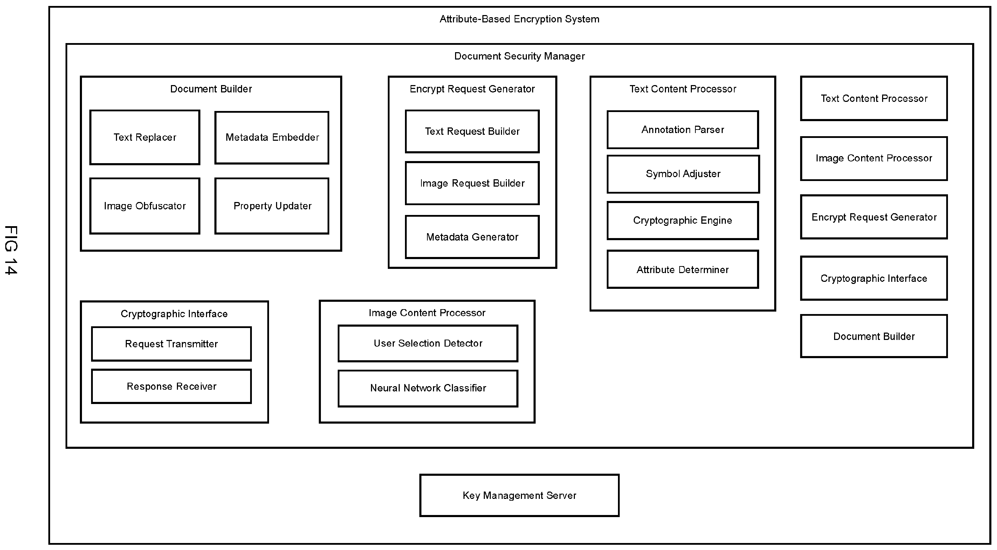

Referring to FIG. 14, a block diagram of an Attribute-Based Encryption System is illustrated. The system may comprise a Document Security Manager as the main component, which may contain several sub-modules for processing and securing document content.

In some aspects, the Document Security Manager may include a Document Builder module. The Document Builder module may contain a Text Replacer, Metadata Embedder, Image Obfuscator, and Property Updater. These components may work together to construct the final encrypted document.

The Document Builder module may be responsible for building a partially encrypted document. In some cases, this process may involve generating a document-specific symmetric key. The symmetric key may be used to encrypt the text and image portions of the document. This approach may combine the efficiency of symmetric encryption for large documents with the fine-grained access control provided by attribute-based encryption.

In some aspects, the Document Builder module may encrypt the document-specific symmetric key using the attribute-based encryption scheme with a master public key. The encrypted symmetric key and the encrypted content may then be embedded within the document structure. This embedding process may be performed by the Metadata Embedder component of the Document Builder module.

The Document Builder module may also include key recovery information in the partially encrypted document. This key recovery information may allow authorized users to reconstruct decryption keys using their attribute credentials and a subset of master private key shares. In some cases, this feature may provide a mechanism for key recovery in case of lost or compromised user keys, while still maintaining the security properties of the attribute-based encryption scheme.

The Document Security Manager may include an Encrypt Request Generator module. This module may contain a Text Request Builder, Image Request Builder, and Metadata Generator, which may prepare encryption requests for different types of content. In some aspects, the Encrypt Request Generator module may create separate encryption requests for the text portions, image portions, and metadata of the document.

The system may contain two Text Content Processor modules. One may include an Annotation Parser, Symbol Adjuster, Cryptographic Engine, and Attribute Determiner. The other may be a standalone module that may work alongside an Image Content Processor and Encrypt Request Generator. These Text Content Processor modules may be responsible for identifying and processing text portions of the document that require encryption.

A Cryptographic Interface module may be included in the Document Security Manager, consisting of a Request Transmitter and Response Receiver. This interface may facilitate communication with external cryptographic services. In some cases, the Cryptographic Interface module may transmit the encryption requests generated by the Encrypt Request Generator module to an external cryptographic engine and receive the encrypted content in response.

The Image Content Processor module may contain a User Selection Detector and a Neural Network Classifier, which may be used for processing and classifying image content within documents. In some aspects, the Neural Network Classifier may employ advanced machine learning techniques to automatically identify sensitive objects or regions within images that require encryption.

Outside the Document Security Manager, the system may include a Key Management Server, which may handle encryption key generation and management for the attribute-based encryption process. In some cases, the Key Management Server may be responsible for generating and managing the master public key used in the encryption of the document-specific symmetric key.

The layout of the system may suggest a modular approach to document security, with separate components handling different aspects of content processing, encryption request generation, and document building. This modular design may allow for flexibility in updating or modifying specific components of the system without affecting others. The system may be designed to provide flexible, attribute-based encryption for various types of document content, including text and images, while maintaining a high level of security and granular access control.

Continuing with the description of FIG. 14, the Document Builder module may include additional components for processing and securing different types of document content. In some aspects, the Document Builder module may contain a Text Decoration Analyzer. This component may be responsible for identifying text decorations within the document, including bold, italic, underline, strikethrough, or color formatting. The Text Decoration Analyzer may associate the identified text decorations with corresponding sensitivity levels or encryption attributes.

In some cases, the Text Decoration Analyzer may work in conjunction with the Text Replacer component to adjust the encryption attributes for text portions based on the associated text decorations. For example, text marked with a double underline may be associated with a higher sensitivity level and consequently assigned stronger encryption attributes compared to text with a single underline.

The Encrypt Request Generator module may include a Text Decoration Request Builder in addition to the Text Request Builder and Image Request Builder. This component may generate specific encryption requests for text portions based on their identified decorations and associated sensitivity levels. In some aspects, the Text Decoration Request Builder may create separate encryption policies for different text decoration types, allowing for fine-grained access control based on visual formatting cues within the document.

The document security manager may be implemented on a computing device, which may provide the necessary processing power and resources to handle complex encryption operations and manage large documents with various content types. In some cases, the computing device may be a dedicated server or a distributed system to ensure high performance and scalability.

The Image Content Processor module may incorporate advanced image analysis techniques to identify sensitive objects or regions within images. In some aspects, this module may employ multiple neural network models, each specialized in detecting specific types of sensitive content such as faces, license plates, or confidential documents within images. The results from these specialized models may be combined to create a comprehensive sensitivity map for each image in the document.

The Cryptographic Interface module may support multiple encryption schemes beyond attribute-based encryption. In some cases, this module may dynamically select the most appropriate encryption method based on the content type, sensitivity level, and user attributes. For example, it may use lightweight encryption for less sensitive text portions while applying more robust encryption schemes to highly classified image regions.

The system may also include a Version Control module that works in conjunction with the Document Builder and Encrypt Request Generator. This module may track changes in document content and encryption attributes over time, allowing for secure collaborative editing while maintaining a history of access control modifications. In some aspects, the Version Control module may generate differential encryption requests for document updates, minimizing the amount of re-encryption required when small changes are made to the document.

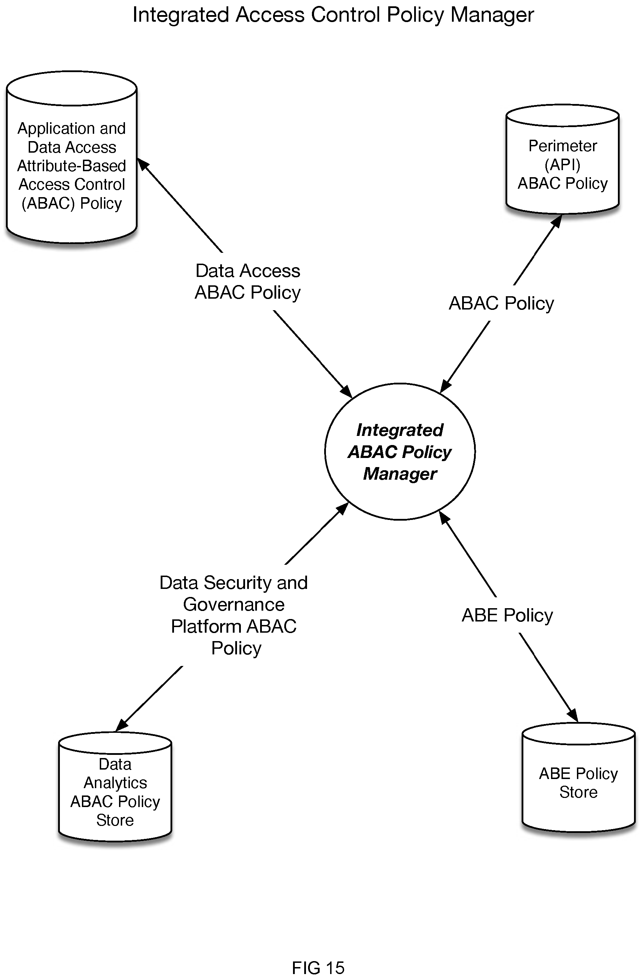

Referring to FIG. 15, an Integrated Access Control Policy Manager system is illustrated. The system may comprise an Integrated ABAC Policy Manager at the center, which may interact with various policy components and stores to create a comprehensive access control framework. In some aspects, the system may include an Application and Data Access Attribute-Based Access Control (ABAC) Policy store. This store may provide a Data Access ABAC Policy to the Integrated ABAC Policy Manager. The Data Access ABAC Policy may define rules for accessing specific applications and data resources based on user attributes, environmental factors, and resource characteristics.

A Perimeter (API) ABAC Policy store may be incorporated into the system. This store may supply an ABAC Policy to the central Integrated ABAC Policy Manager. The Perimeter ABAC Policy may focus on controlling access to APIs and other entry points to the system, potentially implementing a zero-trust security model where each request may be evaluated based on attributes regardless of its origin.

In some cases, a Data Analytics ABAC Policy Store may be connected to the Integrated ABAC Policy Manager. This store may provide a Data Security and Governance Platform ABAC Policy. Such a policy may define rules for accessing and manipulating data within analytics platforms, ensuring that data privacy and governance requirements may be met during analytical processes.

The system may also include an ABE Policy Store that interacts with the central Integrated ABAC Policy Manager, exchanging ABE Policy information. This store may contain policies specific to attribute-based encryption, defining how different portions of documents or data may be encrypted based on their sensitivity and the attributes required to access them.

In some aspects, the Integrated ABAC Policy Manager may process and integrate policies from these various sources to create a unified access control framework. This integration may allow for a cohesive approach to managing access control across different aspects of an organization's data, applications, and infrastructure.

The system's architecture may emphasize the centralized role of the Integrated ABAC Policy Manager in coordinating and synthesizing various policy types. The connections between components may illustrate the flow of policy information from specialized stores to the central manager, enabling a comprehensive access control strategy.

In some cases, the encryption attributes for text portions may include access policy expressions defining combinations of user attributes required for decryption. These expressions may be complex Boolean formulas that specify the precise combination of attributes a user must possess to decrypt a particular text portion. For example, an access policy expression may require a user to have both a "finance" attribute and a "manager" attribute to decrypt sensitive financial data.

The encryption attributes may also include time-based constraints specifying validity periods for decryption keys. These constraints may allow for automatic expiration of access rights after a specified period, enhancing the security of sensitive information. For instance, a decryption key may be valid only for a 24-hour period, after which a new key must be generated and the user re-authenticated.

Hierarchical attribute structures representing organizational roles and clearance levels may be incorporated into the encryption attributes. These structures may allow for more nuanced access control policies that reflect the complexities of organizational hierarchies. For example, a user with a "top secret" clearance level may automatically have access to all documents classified at lower levels, while a user with a "confidential" clearance may only access documents at that level and below.

In some aspects, generating the encrypt content requests may involve assigning each text and image portion to one or more attribute authorities based on the content type and sensitivity. This assignment may allow for distributed management of encryption policies, with different authorities responsible for different types of sensitive information. For instance, a human resources authority may manage attributes related to employee information, while a separate security authority may handle attributes related to classified documents.

The system may generate separate encryption policies for each assigned authority. These policies may be tailored to the specific requirements and regulations relevant to each type of sensitive information. For example, the encryption policy for medical records may incorporate HIPAA compliance requirements, while the policy for financial data may address SEC regulations.

In some cases, the encrypt content requests may include authority identifiers and corresponding encryption policies. This inclusion may allow the cryptographic engine to apply the appropriate encryption scheme based on the specific authority and policy associated with each portion of the document. The authority identifiers may serve as a reference to the specific set of attributes and policies that should be applied during the encryption process.

The Integrated ABAC Policy Manager may implement real-time policy evaluation and enforcement. When a user attempts to access a resource, the manager may consult relevant policies from each store, combine them as needed, and make an access decision based on the user's attributes and the current context. This dynamic approach may allow for flexible and responsive access control that adapts to changing organizational needs and security requirements.

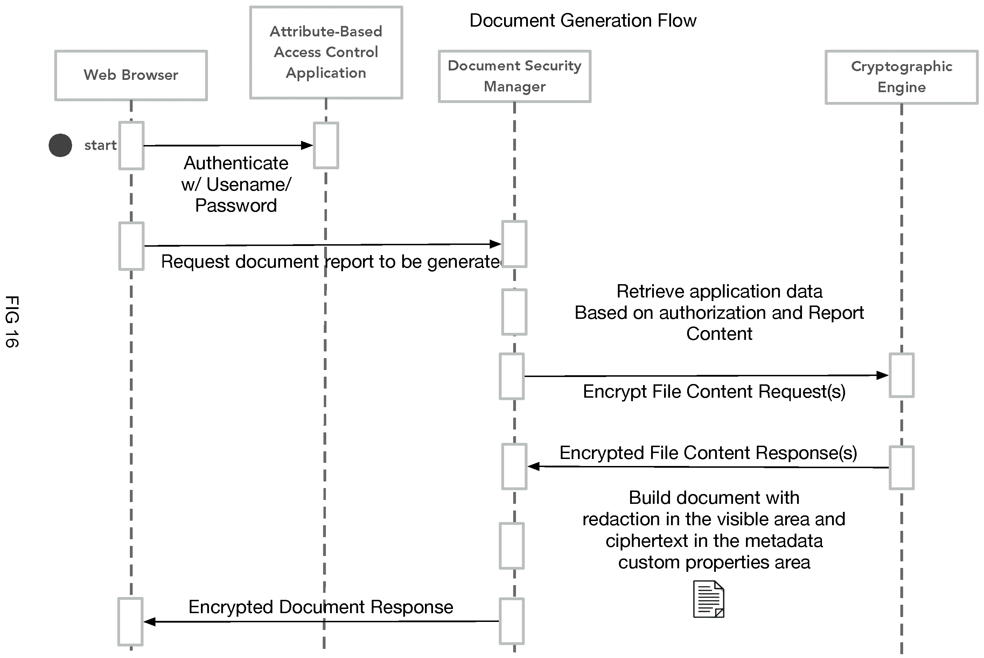

Referring to FIG. 16, a sequence diagram illustrates a Document Generation Flow involving four main components: Web Browser, Attribute-Based Access Control Application, Document Security Manager, and Cryptographic Engine. In some aspects, the process may begin with the Web Browser authenticating to the Attribute-Based Access Control Application using a username and password. This authentication step may involve secure transmission of credentials and may support various authentication methods, such as multi-factor authentication or integration with enterprise single sign-on systems.

Following successful authentication, the Web Browser may send a request to the Document Security Manager for a document report to be generated. In some cases, this request may include parameters specifying the type of report, desired content, or other relevant information. The Document Security Manager may then retrieve application data based on the user's authorization and the requested report content. This step may involve querying various data sources, applying access control policies, and aggregating information to compose the requested document.

Upon receiving the necessary data, the Document Security Manager may send an Encrypt File Content Request to the Cryptographic Engine. This request may include the document content along with metadata specifying the security levels or attributes for different portions of the text. In some aspects, the metadata may be derived from the data sources, access control policies, or user-specified parameters.

The Cryptographic Engine may process this request, applying attribute-based encryption to the specified portions of text. In some cases, the encryption process may involve generating ciphertexts that can only be decrypted by users possessing the required attributes. The Cryptographic Engine may use advanced encryption algorithms and key management techniques to ensure the security and efficiency of the encryption process.

After completing the encryption operations, the Cryptographic Engine may send an Encrypted File Content Response back to the Document Security Manager. This response may include the encrypted portions of text corresponding to the mapped security levels or attributes, along with any necessary metadata for later decryption.

Upon receiving the encrypted content, the Document Security Manager may build the document with redaction in the visible area and ciphertext in the metadata custom properties area. In some aspects, this process may involve replacing the original sensitive text portions with masking symbols or redaction markers. The Document Security Manager may adjust the width of these masking symbols to approximate the width of the original text, helping to preserve the document's visual layout and structure.

The encrypted portions of the text may be stored as metadata within the document structure, such as in custom properties of a Microsoft Office document or similar fields in other file formats. This approach may allow the encrypted content to remain associated with the document while being hidden from unauthorized viewers.

Finally, the Document Security Manager may send an Encrypted Document Response back to the Web Browser, completing the document generation process. In some cases, this response may include the visually redacted document along with the encrypted content stored in its metadata. The Web Browser may then display the document to the user, showing only the unencrypted portions and masking symbols for the encrypted sections.

This Document Generation Flow may demonstrate how the attribute-based encryption system can create secure, selectively encrypted documents based on user authentication and authorization. The process may ensure that sensitive information is protected while still allowing authorized users to access the portions of the document relevant to their roles and clearance levels.

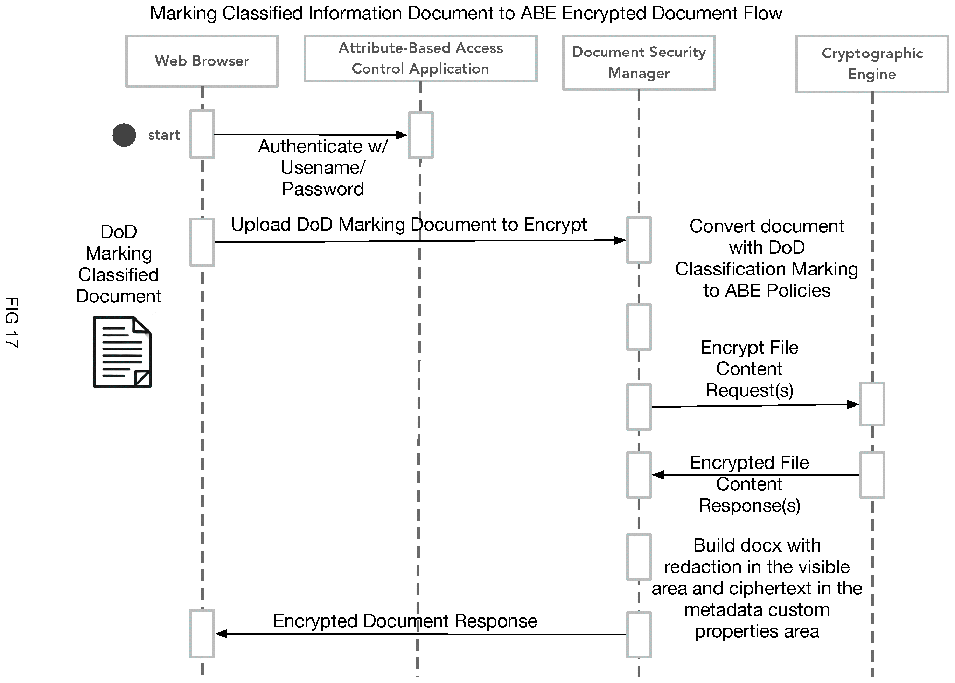

Referring to FIG. 17, a sequence diagram illustrates the process of converting a DoD Marking Classified Information Document to an ABE Encrypted Document. The process may involve four main components: Web Browser, Attribute-Based Access Control Application, Document Security Manager, and Cryptographic Engine.

In some aspects, the sequence may begin with the Web Browser authenticating to the Attribute-Based Access Control Application using a username and password. This authentication step may employ various security protocols to ensure the confidentiality and integrity of the user's credentials during transmission.

Once authenticated, the Web Browser may upload a DoD Marking Classified Document to the Document Security Manager for encryption. In some cases, this document may be represented by an icon in the system interface, indicating its classified nature. The document may contain traditional Department of Defense (DoD) classification markings, such as "TOP SECRET", "SECRET", or "CONFIDENTIAL", along with other sensitive information indicators.

Upon receiving the document, the Document Security Manager may convert the .docx and .xlsx files with DoD Classification Marking to ABE Policies. This conversion step may be crucial for translating traditional classification markings into attribute-based encryption policies. In some aspects, the conversion process may involve parsing the document to identify and interpret the DoD Classification Markings. The Document Security Manager may employ natural language processing techniques or pattern matching algorithms to recognize and categorize different types of classification markings within the document.

The Document Security Manager may maintain a mapping between traditional DoD classification levels and corresponding ABE policies. For example, a "TOP SECRET" marking may be mapped to an ABE policy that requires multiple high-level security attributes for access. In some cases, the system may allow administrators to customize these mappings to align with specific organizational security requirements.

Following the conversion, the Document Security Manager may send an Encrypt File Content Request to the Cryptographic Engine. This request may contain the converted ABE policies and the document content to be encrypted. The request may be transmitted over a secure communication channel to prevent interception or tampering.

The Cryptographic Engine may process this request, applying the ABE encryption to the document content. In some aspects, the encryption process may involve generating complex cryptographic structures that bind the encrypted content to the specified attributes, ensuring that only users possessing the required attributes can decrypt the information.

Upon completing the encryption, the Cryptographic Engine may return an Encrypted File Content Response to the Document Security Manager. This response may contain the encrypted portions of the document, along with any necessary metadata for managing the encrypted content.

Upon receiving the encrypted content, the Document Security Manager may build the .docx file with redaction in the visible area and ciphertext in the metadata custom properties area. This step may ensure that sensitive information is obscured in the visible document while being securely stored in encrypted form within the document's metadata. In some cases, the Document Security Manager may replace sensitive text with redaction markers or placeholder text, while the actual encrypted content may be stored within the document's metadata or custom properties, invisible to casual inspection but accessible to the ABE system for authorized decryption.

Finally, the Document Security Manager may send an Encrypted .docx Response back to the Web Browser, completing the document encryption process. This encrypted document may now contain the sensitive information in a secure, attribute-based encrypted format, allowing for fine-grained access control based on user attributes.

In some aspects, the system may maintain detailed logs of each step in this conversion and encryption process. These logs may record information such as the original document's classification levels, the generated ABE policies, and the sections of the document that were encrypted. Such logging mechanisms may be crucial for auditing purposes and ensuring the proper handling of classified information.

The conversion process from DoD Marking Classified Information Documents to ABE Encrypted Documents may provide a bridge between traditional classification systems and more flexible, attribute-based access control mechanisms. This approach may allow organizations to maintain compatibility with existing classified document workflows while leveraging the advanced security features of attribute-based encryption.

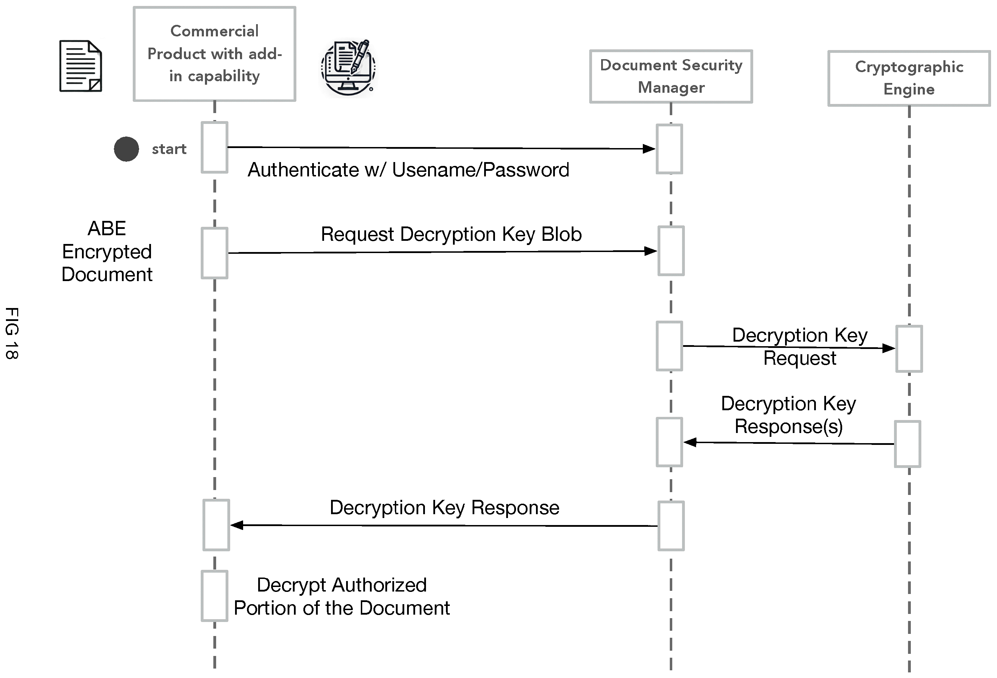

Referring to FIG. 18, a sequence diagram illustrates the process of decrypting an Attribute-Based Encryption (ABE) encrypted document using a commercial product with add-in capability. The process may involve three main components: Commercial Product with add-in capability, Document Security Manager, and Cryptographic Engine.

In some aspects, the sequence may begin with the Commercial Product authenticating to the Document Security Manager using a username and password. This authentication step may employ various security protocols to ensure the confidentiality and integrity of the user's credentials during transmission. The authentication process may support multiple factors, potentially incorporating biometric data or hardware tokens for enhanced security.

Once authenticated, the Commercial Product, which may have an ABE Encrypted Document, may send a Request Decryption Key Blob to the Document Security Manager. In some cases, this request may include information about the encrypted document, such as its identifier or metadata, as well as the user's context and attributes. The Decryption Key Blob request may be designed to work within the constraints of the commercial product's add-in architecture, allowing for seamless integration with existing document workflows.

Upon receiving the Decryption Key Blob request, the Document Security Manager may forward a Decryption Key Request to the Cryptographic Engine. This request may include the user's attributes, the document's encryption policy, and any other relevant information needed for key generation. In some aspects, the Document Security Manager may act as an intermediary, translating between the commercial product's add-in interface and the specialized cryptographic services.

The Cryptographic Engine may process the Decryption Key Request, evaluating the user's attributes against the document's encryption policy. In some implementations, this evaluation may involve complex policy computations, potentially using techniques such as Boolean formula satisfaction or linear secret sharing schemes. The Cryptographic Engine may generate one or more decryption keys based on the outcome of this evaluation.

After generating the necessary keys, the Cryptographic Engine may return a Decryption Key Response(s) to the Document Security Manager. This response may include multiple keys if different portions of the document require separate decryption keys based on varying access policies. In some cases, the keys may be time-limited or incorporate usage restrictions to enhance security.

The Document Security Manager may then send a Decryption Key Response back to the Commercial Product. This response may be formatted in a way that is compatible with the commercial product's add-in architecture, potentially involving serialization or encoding of the key data. In some aspects, the Decryption Key Response may include additional metadata or instructions to guide the commercial product in applying the decryption keys correctly to different portions of the document.

Finally, the Commercial Product may use the received key(s) to Decrypt Authorized Portion of the Document. This decryption process may occur within the commercial product's environment, leveraging the add-in capability to integrate the ABE decryption functionality seamlessly with the product's native features. In some cases, the decryption process may involve:
1. Parsing the encrypted document to identify encrypted sections
2. Matching the received decryption keys with the appropriate encrypted sections
3. Applying the decryption algorithm to reveal the authorized content
4. Maintaining redaction or masking of sections for which the user lacks the necessary attributes

In some implementations, the Commercial Product may implement additional security measures during and after decryption, such as:
1. Preventing copy-paste or screen capture of decrypted content
2. Applying dynamic watermarks to decrypted sections
3. Implementing time-limited access to decrypted content
4. Logging all decryption and access events for auditing purposes

This approach to decryption using a commercial product with add-in capability may offer several advantages, including:
1. Integration with widely-used document editing and viewing software
2. Leveraging existing user interfaces and workflows
3. Reducing the need for specialized software for handling encrypted documents
4. Enabling offline decryption capabilities when necessary

By supporting decryption through commercial product add-ins, the system may provide a flexible and user-friendly approach to accessing ABE-encrypted documents while maintaining the security and access control features of attribute-based encryption.

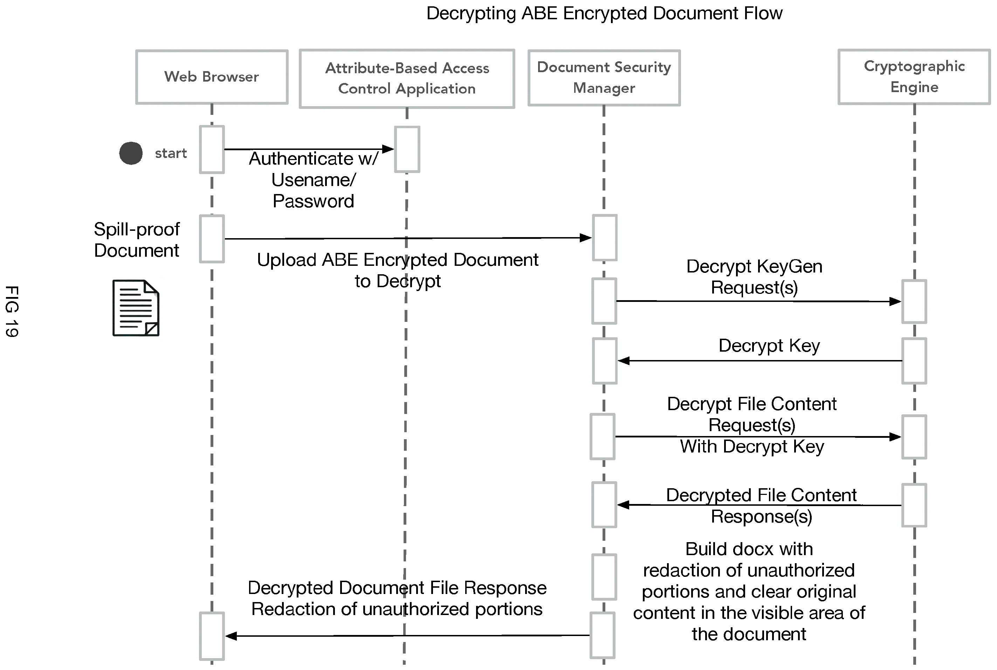

Referring to FIG. 19, a sequence diagram illustrates the process of decrypting an Attribute-Based Encryption (ABE) encrypted document. The process may involve four main components: Web Browser, Attribute-Based Access Control Application, Document Security Manager, and Cryptographic Engine.

In some aspects, the sequence may begin with the Web Browser authenticating to the Attribute-Based Access Control Application using a username and password. This authentication step may employ various security protocols to ensure the confidentiality and integrity of the user's credentials during transmission. The authentication process may support multiple factors, potentially incorporating biometric data or hardware tokens for enhanced security.

Once authenticated, the Web Browser may upload an ABE Encrypted Document, labeled as a "Spill-proof Document" in the diagram, to the Document Security Manager for decryption. In some cases, this upload process may involve secure file transfer protocols to protect the encrypted document during transmission.

Upon receiving the encrypted document, the Document Security Manager may send a Decrypt KeyGen Request to the Cryptographic Engine. This request may include information about the user's attributes and the document's encryption policy. In some aspects, the Document Security Manager may perform preliminary checks to ensure that the user has the necessary attributes to potentially access at least some portions of the document before initiating the key generation process.

The Cryptographic Engine may process this request and return a Decrypt Key to the Document Security Manager. The generation of this decrypt key may involve complex cryptographic operations that combine the user's attributes with the master secret key of the ABE system. In some cases, the decrypt key may be a composite key that allows for selective decryption of different portions of the document based on the user's specific attributes.

Upon receiving the decrypt key, the Document Security Manager may send a Decrypt File Content Request with the Decrypt Key to the Cryptographic Engine. This request may include the encrypted document content along with the generated decrypt key. In some aspects, the Document Security Manager may segment the document and send multiple decrypt requests for different portions of the document, allowing for parallel processing and improved performance for large documents.

The Cryptographic Engine may process this request and return a Decrypted File Content Response to the Document Security Manager. During this step, the Cryptographic Engine may apply the ABE decryption algorithms to selectively decrypt portions of the document based on the user's attributes encoded in the decrypt key. In some cases, the decryption process may involve evaluating complex access structures associated with each encrypted section of the document.

After receiving the decrypted content, the Document Security Manager may build the .docx file with redaction of unauthorized portions and clear original content in the visible area of the document or spreadsheet. This process may involve:
1. Reconstructing the document structure
2. Inserting decrypted content into appropriate sections
3. Applying visual redaction techniques to portions the user is not authorized to view
4. Preserving the original formatting and layout of the document

In some aspects, the Document Security Manager may employ advanced document processing techniques to ensure that the redacted document maintains its visual integrity and usability. This may include adjusting page breaks, recalculating table layouts, or resizing images to accommodate redacted sections.

Finally, the Document Security Manager may send a Decrypted Document File Response with redaction of unauthorized portions back to the Web Browser, completing the document decryption process. In some cases, this response may include additional metadata or instructions for the Web Browser on how to render the partially decrypted document securely.

The Web Browser may then display the decrypted document to the user, showing only the portions for which the user has the necessary attributes to access. In some aspects, the Web Browser may implement additional security measures to prevent unauthorized copying or distribution of the decrypted content, such as disabling print functionality or applying dynamic watermarks.

This decryption process may provide a flexible and secure method for accessing ABE-encrypted documents, allowing users to view only the portions of the document for which they have the necessary attributes or clearance levels. The use of redaction for unauthorized portions may maintain the document's overall structure and context while protecting sensitive information from unauthorized access.

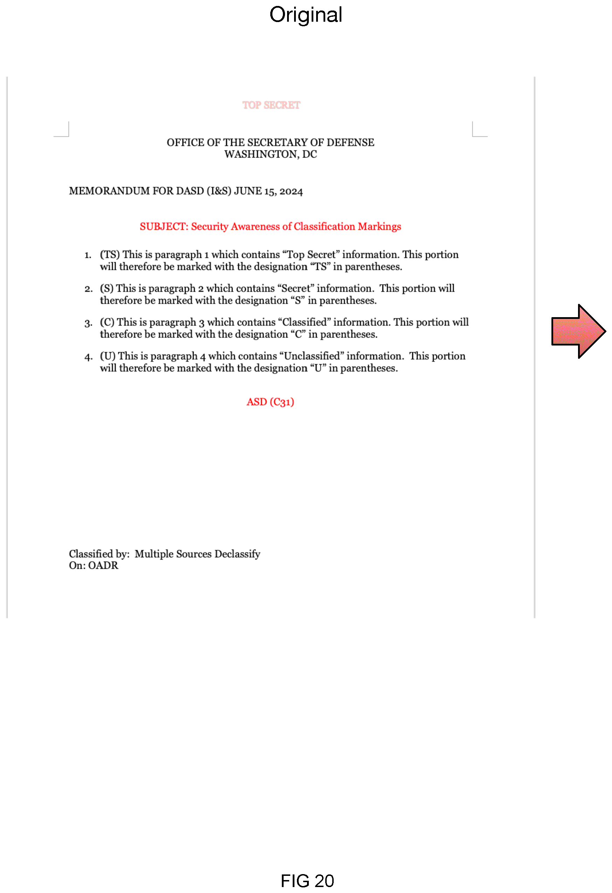

Referring to FIG. 20, an orthogonal front view of a document titled "Original" from the Office of the Secretary of Defense in Washington, DC is illustrated. In some aspects, the document may be marked with a top secret header 1 at the top in red text. The document may be dated June 15, 2024 and addressed to DASD (I&S). In some cases, the subject line may read "Security Awareness of Classification Markings" in red text.

The body of the document may contain four numbered paragraphs, each demonstrating different classification levels. In some aspects, these paragraphs may be marked as follows:
1. Marked as "(TS)" for Top Secret information.
2. Marked as "(S)" for Secret information.
3. Marked as "(C)" for Classified information.
4. Marked as "(U)" for Unclassified information.

At the bottom of the document, the classification marker C31 may be displayed as "ASD (C31)" in red text. In some cases, additional classification information may be provided below, stating "Classified by: Multiple Sources Declassify On: OADR".

To the right of the document, there may be a red arrow pointing to the right. In some aspects, this arrow may indicate further processing or the next step in handling this document.

The document layout may demonstrate how different sections within a single document can be marked with varying levels of classification. This approach may allow for selective access based on security clearance levels. In some cases, the use of different colors and markings for classification levels may provide visual cues to quickly identify the sensitivity of different portions of the document.

The document security manager may process such a document by identifying the classification markings and associating them with appropriate encryption attributes. For example, the top secret header 1 may be associated with the highest level of encryption, requiring the most stringent set of user attributes for decryption. The secret paragraph 2, classified paragraph 3, and unclassified paragraph 4 may be assigned progressively lower levels of encryption attributes, corresponding to their respective classification levels.

In some aspects, the document security manager may employ optical character recognition (OCR) techniques to automatically detect and interpret the classification markings within the document. This automated process may facilitate the efficient application of attribute-based encryption to different sections of the document based on their identified classification levels.

The classification marker C31 at the bottom of the document may be treated as metadata associated with the entire document. In some cases, this metadata may be encrypted separately from the document content, with its own set of access control attributes. This approach may allow for fine-grained control over who can view the overall classification level of the document, even if they do not have access to its contents.

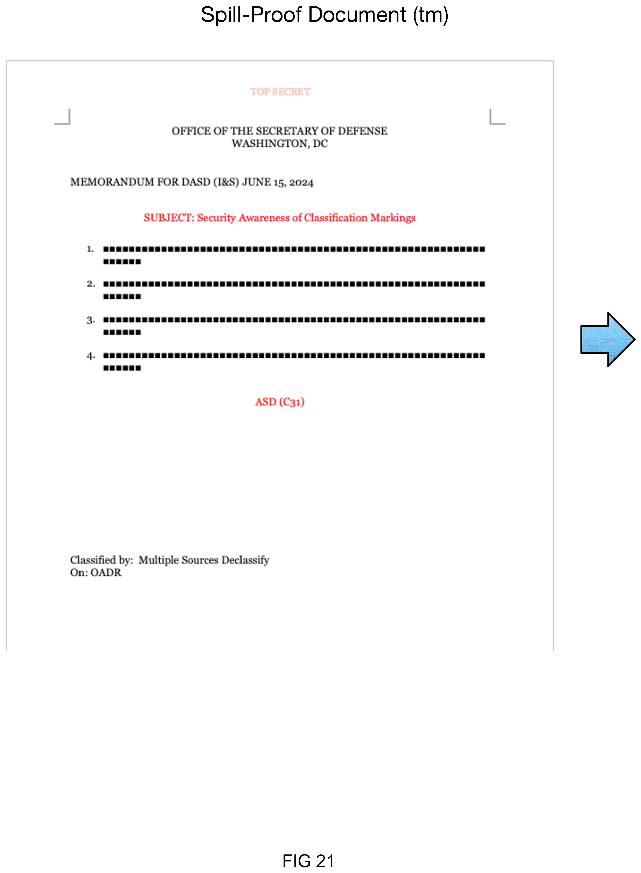

Referring to FIG. 21, an orthogonal front view of a spill-proof document is illustrated. In some aspects, the document may appear to be a memorandum from the Office of the Secretary of Defense in Washington, DC. At the top of the document, there may be a "TOP SECRET" classification marking. The memorandum may be dated June 15, 2024 and addressed to DASD (I&S). In some cases, the subject line may read "Security Awareness of Classification Markings".

The body of the document may contain four numbered paragraphs, each of which may be redacted and represented by black rectangular blocks. This redaction may demonstrate the spill-proof nature of the document, where sensitive information is obscured from unauthorized viewers. In some aspects, the document security manager may adjust the width of masking symbols to be approximately the same as the width of the original text. This adjustment may help preserve the document's visual layout and structure, making it easier for users to understand the context and flow of the content even when portions are redacted.

In some cases, the process of adjusting the width of masking symbols may include calculating the width of each portion of the original text to be encrypted. This calculation may take into account factors such as font size, font style, and character spacing. The system may then determine the number and type of masking symbols needed to approximate the calculated width. The document security manager may use a combination of different symbols (e.g., ■, •, or ★) to achieve a close match to the original text width.

At the bottom of the document, there may be a classification marker "ASD (C3I)". Additional classification information may be provided, stating "Classified by: Multiple Sources Declassify On: OADR". In some aspects, this classification information may be encrypted separately from the main document content, with its own set of access control attributes.

To the right of the document, there may be a blue arrow pointing to the right. In some cases, this arrow may indicate further processing or the next step in handling this spill-proof document.

The document layout and redactions may showcase a method for protecting sensitive information while preserving the overall structure and non-sensitive elements of the memorandum. This approach may allow authorized users to understand the general context and structure of the document even when they do not have access to all of its contents.

In some aspects, the system may support different masking symbols or styles for different security levels or attributes. For example, Top Secret information may be masked with solid black rectangles, while Secret information may use a pattern of diagonal lines. This visual differentiation may provide authorized users with additional context about the nature of the redacted information without revealing its contents.

The spill-proof document approach may be particularly useful in scenarios where documents need to be shared across different security domains or with individuals who have varying levels of clearance. By maintaining the document's structure and using width-adjusted masking symbols, the system may facilitate more effective communication and collaboration while still enforcing strict access controls on sensitive information.

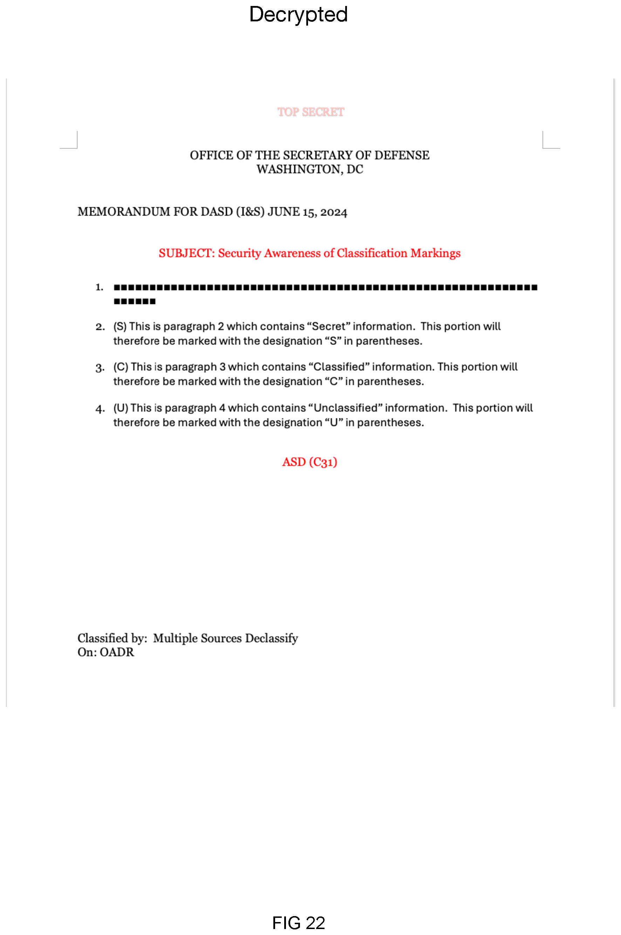

Referring to FIG. 22, an orthogonal front view of a decrypted document from the Office of the Secretary of Defense in Washington, DC is illustrated. The document may contain several components demonstrating different classification levels and how they may be selectively revealed based on a user's attributes and authorization.

At the top of the document, the top secret header 1 may be displayed in red text. In some aspects, the use of color for the classification marking may provide a clear visual indicator of the document's highest level of sensitivity. The system may employ different colors or text styles for various classification levels to enhance visual distinction in the document. For example, red text may be used for Top Secret markings, while other colors may be utilized for lower classification levels.

The document may contain four numbered paragraphs, each with different classification levels. In some cases, the first paragraph may be redacted, represented by a black rectangular block. This redaction may indicate that the user does not have the necessary attributes or clearance to view this particular section. The masking symbols used for redaction may include at least one of ■, •, or ★. In some aspects, the system may use different symbols or patterns to represent various security levels or attributes, providing authorized users with additional context about the nature of the redacted information.

The secret paragraph 2 may be marked with "(S)" and may contain information designated as "Secret". The classified paragraph 3 may be marked with "(C)" and may contain information designated as "Classified". The unclassified paragraph 4 may be marked with "(U)" and may contain information designated as "Unclassified". This granular approach to classification within a single document may demonstrate the system's ability to apply attribute-based encryption at a paragraph or even sentence level.

In some implementations, the document security manager may adjust the width of masking symbols to be within 10% of the width of the original text. This precise adjustment may help maintain the document's original layout and structure, making it easier for authorized users to understand the context and flow of the content even when portions are redacted.

At the bottom of the document, the classification marker C31 may be displayed as "ASD (C31)" in red text. Additional classification information may be provided below, stating "Classified by: Multiple Sources Declassify On: OADR". This metadata may be crucial for managing the document's lifecycle and ensuring proper handling according to security protocols.

The selective decryption and display of document sections based on user attributes may demonstrate the system's ability to provide granular access control. In some aspects, the system may dynamically reveal or conceal portions of the document in real-time as a user's attributes or clearance levels change, without requiring re-encryption of the entire document.

The use of familiar classification markings (e.g., "TOP SECRET", "SECRET") alongside the attribute-based encryption system may provide a bridge between traditional security practices and more advanced, flexible access control mechanisms. This approach may facilitate adoption of the new system while maintaining compatibility with existing document handling procedures and user expectations.

In some aspects, the digital document may comprise a video file. When processing the original image content for a video file, the document security manager may employ additional techniques to handle the temporal nature of the data. The processing may further comprise extracting individual frames from the video file. In some cases, this extraction may occur at regular intervals or at key points determined by scene change detection algorithms.

The document security manager may analyze the extracted frames to identify sensitive objects or regions. This analysis may utilize similar techniques as those applied to static images, such as employing a convolutional neural network to segment the frame into multiple regions. In some aspects, feature vectors may be extracted for each segmented region using a pre-trained deep learning model. The system may then classify the sensitivity level of each region based on the extracted features.

To account for the dynamic nature of video content, the document security manager may generate temporal bounding boxes to track the identified sensitive objects or regions across multiple frames. These temporal bounding boxes may be represented as a series of spatial coordinates coupled with frame numbers or timestamps. In some cases, this approach may allow for consistent tracking of sensitive content throughout the video, even as objects move or change position.

The system may incorporate temporal information to improve the accuracy of sensitive object or region identification. In some aspects, this may involve using recurrent neural networks or 3D convolutional networks that can capture motion and temporal dependencies across multiple frames. The document security manager may analyze patterns of movement and changes in object appearance over time to refine the identification and tracking of sensitive content.

Once sensitive objects or regions are identified and tracked across frames, the document security manager may apply visual obfuscation techniques to these elements within each affected frame. The obfuscation techniques may include blurring, pixelation, or replacement with solid colors or patterns. In some cases, the level and type of obfuscation applied may vary based on the sensitivity classification of each region.

The document security manager may reconstruct the video file with obfuscated frames while maintaining the original video format and playback characteristics. This process may involve careful handling of video codec parameters, frame rates, and metadata to ensure that the obfuscated video remains compatible with standard video players and streaming protocols. In some aspects, the system may also handle audio content associated with the video, potentially detecting and obfuscating sensitive audio information using techniques such as audio redaction or replacement with neutral tones.

The attribute-based encryption scheme may be applied to the processed video content, allowing for fine-grained access control based on user attributes and the sensitivity of different parts of the visual data. In some cases, the encryption may be applied to individual frames or to temporal segments of the video content. This approach may enable selective decryption of specific portions of the video based on a user's attributes and clearance levels.

Once sensitive objects or regions are identified and tracked across frames, the document security manager may apply visual obfuscation techniques to these elements within each affected frame. In some aspects, the obfuscation techniques may include blurring, pixelation, or replacement with solid colors or patterns. The level and type of obfuscation applied may vary based on the sensitivity classification of each region. For example, highly sensitive content may be completely replaced with a solid color, while less sensitive information may be blurred to a degree that obscures details but maintains general shapes.

In some cases, the document security manager may employ adaptive obfuscation techniques that adjust based on the motion and context of the sensitive content. For instance, a moving object may require dynamic blurring that follows its trajectory across frames, while stationary sensitive regions may use static obfuscation methods. The system may also consider the surrounding visual context to ensure that the obfuscated areas blend seamlessly with the rest of the frame, minimizing visual disruption.

The document security manager may reconstruct the video file with obfuscated frames while maintaining the original video format and playback characteristics. This process may involve careful handling of video codec parameters, frame rates, and metadata to ensure that the obfuscated video remains compatible with standard video players and streaming protocols. In some aspects, the system may preserve the original video container format and codec, only modifying the frame data where obfuscation has been applied.

During reconstruction, the document security manager may need to address potential artifacts or discontinuities introduced by the obfuscation process. In some cases, this may involve applying smoothing algorithms at the boundaries of obfuscated regions to ensure a natural transition between obscured and unobscured areas of the video. The system may also adjust frame timing and synchronization to compensate for any processing delays introduced by the obfuscation techniques.

In some aspects, the document security manager may implement a layered approach to video reconstruction, where the obfuscated content is stored as a separate overlay that can be dynamically applied or removed based on user attributes. This approach may allow for more efficient storage and transmission of the protected video content, as well as enable real-time adjustment of visible content based on changing user permissions.

The system may also handle audio content associated with the video during the reconstruction process. In some cases, sensitive audio information may be detected and obfuscated using techniques such as audio redaction, frequency filtering, or replacement with neutral tones. The document security manager may ensure that the audio obfuscation is precisely synchronized with the visual obfuscation to maintain coherence between the audio and video streams.

To preserve the original playback characteristics, the document security manager may maintain the video's frame rate, aspect ratio, and resolution. In some aspects, the system may generate multiple versions of the obfuscated video at different quality levels or resolutions to support adaptive streaming scenarios while ensuring that the obfuscation remains effective across all versions.

The reconstructed video file may include embedded metadata that describes the applied obfuscation techniques and the attribute-based encryption policies associated with different segments of the video. This metadata may be encrypted and accessible only to authorized systems or users with appropriate attributes. In some cases, this approach may enable dynamic content filtering and access control during playback without requiring reprocessing of the entire video file.

Throughout this disclosure, various terms and phrases are used to describe features of the disclosed technology. It is to be understood that these terms and phrases may encompass a variety of meanings and definitions, as is common in the field of technology and patent law. The definitions of these terms may vary depending on the context in which they are used, the specific embodiment being described, or the interpretation of the technology by those skilled in the art.

While some example embodiments disclosed herein operate on documents that include both image and text content, the invention may also be applied to files that contain only text or only images. In some aspects, the system may process pure text documents such as plain text files, word processing documents, or source code files, applying the attribute-based encryption scheme to selected portions of text based on content analysis, annotations, or user-defined selections. Similarly, the system may handle image-only files such as photographs, diagrams, or scanned documents, employing techniques such as object detection, segmentation, and classification to identify sensitive regions for encryption. In some cases, the document security manager may adapt its processing pipeline based on the content type of the input file, activating only the relevant modules for text or image processing as needed. This flexibility allows the system to provide comprehensive security solutions across a wide range of file types and formats.

While the example attribute-based encryption scheme described in this disclosure utilizes a ciphertext-policy attribute-based encryption (CP-ABE) algorithm, it is important to note that other forms of attribute-based encryption may be employed in various implementations of the system. These alternative forms of ABE may include key-policy attribute-based encryption (KP-ABE), multi-authority attribute-based encryption (MA-ABE), hierarchical attribute-based encryption (HABE), and fuzzy attribute-based encryption (Fuzzy-ABE). In some cases, KP-ABE may be used when the access policy needs to be associated with the user's private key rather than the ciphertext, potentially offering more flexibility in managing user permissions. MA-ABE may be employed in scenarios where multiple independent authorities are responsible for issuing attributes, which may be beneficial in large organizations with decentralized security management. HABE may be utilized when a hierarchical structure of attributes is required, allowing for more granular access control based on organizational hierarchies. Fuzzy-ABE may be implemented when approximate matching of attributes is desired, potentially providing more resilience to minor variations in attribute values. The choice of ABE scheme may depend on specific security requirements, organizational structure, and the nature of the documents and images being protected. In some aspects, the system may be designed to support multiple ABE schemes simultaneously, allowing for flexible adaptation to different use cases within the same organization.

In various embodiments, certain variable names, symbols, or labels may be used in the claims to represent various elements, components, or steps of the described methods, systems, and apparatuses. These variable names, symbols, or labels are provided for convenience and clarity in describing the claimed subject matter. However, it should be understood that the use of such variable names, symbols, or labels in the claims does not necessarily limit these elements, components, or steps to being the same specific entities described in the specification or in other parts of the disclosure. The variable names, symbols, or labels used in the claims should be interpreted broadly and may encompass various implementations, variations, or equivalents of the described elements, components, or steps, unless explicitly stated otherwise or clearly limited by the context of the claim. As such, the scope of the claims is not confined to the specific examples or embodiments described in the specification, but rather extends to the full breadth of the inventive concepts disclosed herein.

For instance, terms such as "computing device," "processor," "memory," and "network" may refer to a wide range of devices, components, systems, and configurations known in the art, and their specific definitions may differ based on the implementation or design of the system. Similarly, phrases like "securely storing," "computing a vector," and "generating a message" may involve various methods, techniques, and processes that achieve the same or similar outcomes but may be executed in different manners.

It is also to be understood that the use of terms in the singular or plural form is not intended to limit the scope of the claims. For example, the mention of "a computing device" does not preclude the presence of multiple computing devices within a system. Likewise, references to "a network" may include various interconnected networks or a single network comprising multiple segments or layers.

Furthermore, the use of the term "may" in relation to an action or feature indicates that the action or feature is possible, but not necessarily mandatory. This term is used to describe optional or alternative aspects of the disclosed technology that provide flexibility in how the technology may be implemented or utilized.

The definitions provided herein are intended to serve as examples and are not exhaustive. Those skilled in the art may ascribe different meanings to these terms based on the context, the specific technology being described, or the advancements in the field. Therefore, the definitions of the terms and phrases used in this disclosure and the claims are to be interpreted broadly and in a manner consistent with the understanding of those skilled in the relevant art.

The use of the word "a" or "an" when used in conjunction with the claims herein is to be interpreted as including one or more than one of the element it introduces. Similarly, the use of the term "or" is intended to be inclusive, such that the phrase "A or B" is intended to include A, B, or both A and B, unless explicitly stated otherwise.

Reference throughout the specification to "one embodiment," "another embodiment," "an embodiment," and so forth, means that a particular feature, structure, or characteristic described in connection with the embodiment is included in at least one embodiment of the present disclosure, and may not necessarily be present in all embodiments. Furthermore, the particular features, structures, or characteristics may be combined in any suitable manner in one or more embodiments without limitation.

The use of the terms "first," "second," and the like does not imply any order or sequence, but are used to distinguish one element from another, and the terms "top," "bottom," "front," "back," "leading," "trailing," and the like are used for descriptive purposes and are not necessarily to be construed as limiting.

As used herein, the term "processor" refers to any computing entity capable of executing instructions to perform a specific set of operations, whether implemented in hardware, firmware, software, or any combination thereof. This definition includes, but is not limited to, the following types of processors: Central Processing Unit (CPU), Graphics Processing Unit (GPU), Digital Signal Processor (DSP), Field-Programmable Gate Array (FPGA), Application-Specific Integrated Circuit (ASIC), microcontroller, System on Chip (SoC), Neural Processing Unit (NPU), quantum processor, cloud-based and distributed processors, multi-core and parallel processors, and virtual processors. The term "processor" also encompasses the associated memory hierarchies, including primary memory (such as RAM), secondary storage (such as hard drives and SSDs), and cache memory, which work in conjunction with the processor to store and retrieve data necessary for executing instructions. In this patent application, any reference to a "processor" should be interpreted broadly to include any type of processing unit capable of performing the described functions, regardless of its specific implementation, architecture, or physical form.

As used herein, the term "messages" may refer to any form of data or information that can be processed, transmitted, or stored in a digital format. Messages may include, but are not limited to, arbitrary-length plaintext messages, pre-hashed messages, concatenated messages, binary data, network protocol messages, database records, and time-stamped messages. Messages may be composed of characters, symbols, or binary data and may represent various forms of content such as text, numbers, multimedia, executable code, or any other data that can be digitally encoded. Messages may be used as input for cryptographic functions, such as keyed hash functions, where they are transformed into a fixed-size hash value influenced by a secret cryptographic key. The term "messages" encompasses a wide range of data types and structures, from simple text strings to complex structured data, and may include metadata, headers, footers, or other information that facilitates the processing, transmission, or interpretation of the content. Messages may be generated by users, systems, or processes and may be intended for various purposes, including communication, authentication, verification, logging, or any other function that involves the use of digital data.

The term "database" should be construed to mean a blockchain, distributed ledger technology, key-value store, document-oriented database, graph database, time-series database, in-memory database, columnar database, object-oriented database, hierarchical database, network database, or any other structured data storage system capable of storing and retrieving information. This may include traditional relational database management systems (RDBMS), NoSQL databases, NewSQL databases, or hybrid database systems that combine multiple database paradigms. The database may be centralized, distributed, or decentralized, and may employ various data models, indexing strategies, and query languages to organize and access the stored information. It may also incorporate features such as ACID (Atomicity, Consistency, Isolation, Durability) compliance, eventual consistency, sharding, replication, or partitioning to ensure data integrity, availability, and scalability. The database may be hosted on-premises, in the cloud, or in a hybrid environment, and may support various access methods including direct queries, API calls, or event-driven architectures.

The terms "connected," "coupled," or any variant thereof, mean any direct or indirect connection or coupling between two or more elements, and may encompass the presence of one or more intermediate elements between the two elements that are connected or coupled to each other.

The description of the embodiments of the present disclosure is intended to be illustrative, and not to limit the scope of the claims. Many alternatives, modifications, and variations will be apparent to those skilled in the art. A number of implementations have been described. Nevertheless, it will be understood that various modifications may be made without departing from the spirit and scope of the disclosure. Accordingly, other implementations are within the scope of the following claims.

Further aspects of the invention:
1. A method for securing document content, comprising:
   receiving, by a document security manager implemented on a computing device, a digital document containing original text content and original image content;
   processing the original text content to identify text content portions by:
      parsing the document to locate in-line text annotations,
      analyzing proximate text to determine the scope of each annotation,
      extracting text content within the determined scope, and
      determining encryption attributes for an attribute-based encryption scheme based on the in-line text annotations;
   processing the original image content to identify image portions by:
      detecting user-defined selections of image regions through a graphical interface, or
      employing a trained neural network to automatically identify and classify sensitive objects within the images;
   generating one or more encrypt content requests, the one or more requests including:
      the identified text portions with their associated encryption attributes,
      the identified image portions with corresponding bounding box coordinates, and
      metadata specifying the encryption schemes to be applied;
      transmitting the encrypt content requests to a cryptographic engine via a secure communication channel;
      receiving, from the cryptographic engine, encrypted text content for the text portions and encrypted image content for the image portions, wherein the cryptographic engine applies an attribute-based encryption scheme to the text portions and image portions; and building a partially encrypted document by:
         replacing original text content with masking symbols,
         programmatically adjusting the masking symbol width to maintain document layout and formatting,
         applying visual obfuscation techniques to the original image content based on sensitivity levels,
         embedding the encrypted text and image content as metadata within the document structure, and
         updating document properties to indicate the presence of encrypted content.
2. The method of aspect 1, wherein the attribute-based encryption scheme utilizes a ciphertext-policy attribute-based encryption (CP-ABE) algorithm, and wherein the encryption attributes for text portions include:
   access policy expressions defining combinations of user attributes required for decryption, time-based constraints specifying validity periods for decryption keys, and
   hierarchical attribute structures representing organizational roles and clearance levels.
3. The method of aspects 1 or 2, wherein processing the original image content further comprises:
   segmenting the image into multiple regions using a convolutional neural network,
   extracting feature vectors for each segmented region using a pre-trained deep learning model, classifying the sensitivity level of each region based on the extracted features, and
   generating encryption attributes for each region based on its classified sensitivity level and content type.
4. The method according to any one of aspects 1 to 3, further comprising:
   generating a decryption key request based on authenticated user attributes;
   transmitting the decryption key request to a key management server;
   receiving a decryption key from the key management server, wherein the decryption key is derived from the user's attribute set and a master secret key;
   selectively decrypting portions of the document using the received decryption key; and
   rendering a partially decrypted version of the document with authorized content visible and unauthorized content remaining obfuscated.
5. The method according to any one of aspects 1 to 4, wherein the cryptographic engine implements a multi-authority attribute-based encryption scheme, and wherein generating the encrypt content requests further comprises:
   assigning each text and image portion to one or more attribute authorities based on the content type and sensitivity;
   generating separate encryption policies for each assigned authority; and
   including authority identifiers and corresponding encryption policies in the encrypt content requests.
6. The method according to any one of aspects 1 to 5, wherein building the partially encrypted document further comprises:
   generating a document-specific symmetric key;
   encrypting the symmetric key using the attribute-based encryption scheme with a master public key;
   encrypting the text and image portions using the symmetric key;
   embedding the encrypted symmetric key and the encrypted content within the document structure; and
   including key recovery information that allows authorized users to reconstruct decryption keys using their attribute credentials and a subset of master private key shares.
7. The method according to any one of aspects 1 to 6,
   wherein the digital document comprises a video file, and wherein processing the original image content further comprises:
   extracting individual frames from the video file;
   analyzing the extracted frames to identify sensitive objects or regions;
   generating temporal bounding boxes to track the identified sensitive objects or regions across multiple frames;
   applying the visual obfuscation techniques to the sensitive objects or regions within each affected frame; and
   reconstructing the video file with the obfuscated frames while maintaining the original video format and playback characteristics,
      and/or
   wherein processing the original text content further comprises:
      identifying text decorations within the document, including bold, italic, underline, strikethrough, or color formatting;
      associating the identified text decorations with corresponding sensitivity levels or encryption attributes; and
      adjusting the encryption attributes for text portions based on the associated text decorations.
8. A system for securing document content, comprising:
   a document security manager implemented on a computing device, the document security manager configured to:
      receive a digital document containing original text content and original image content;
      process the original text content to identify text content portions by:
         parsing the document to locate in-line text annotations,
         analyzing proximate text to determine the scope of each annotation,
         extracting text content within the determined scope, and
         determining encryption attributes for an attribute-based encryption scheme based on the in-line text annotations;
   process the original image content to identify image portions by:
      detecting user-defined selections of image regions through a graphical interface, or
      employing a trained neural network to automatically identify and classify sensitive objects within the images;
   generate one or more encrypt content requests, the one or more requests including:
      the identified text portions with their associated encryption attributes,
      the identified image portions with corresponding bounding box coordinates, and
      metadata specifying the encryption schemes to be applied;
   transmit the encrypt content requests to a cryptographic engine via a secure communication channel;
   receive, from the cryptographic engine, encrypted text content for the text portions and encrypted image content for the image portions, wherein the cryptographic engine applies an attribute-based encryption scheme to the text portions and image portions; and
   build a partially encrypted document by:
      replacing original text content with masking symbols,
      programmatically adjusting the masking symbol width to maintain document layout and formatting,
      applying visual obfuscation techniques to the original image content based on sensitivity levels,
      embedding the encrypted text and image content as metadata within the document structure, and
      updating document properties to indicate the presence of encrypted content.
9. The system of aspect 8, wherein the attribute-based encryption scheme utilizes a ciphertext-policy attribute-based encryption (CP-ABE) algorithm, and wherein the encryption attributes for text portions include:
   access policy expressions defining combinations of user attributes required for decryption, time-based constraints specifying validity periods for decryption keys, and
   hierarchical attribute structures representing organizational roles and clearance levels.
10. The system of aspects 8 or 9, wherein processing the original image content further comprises:
   segmenting the image into multiple regions using a convolutional neural network,
   extracting feature vectors for each segmented region using a pre-trained deep learning model, classifying the sensitivity level of each region based on the extracted features, and
   generating encryption attributes for each region based on its classified sensitivity level and content type.
11. The system according to any one of aspects 8 to 10, wherein the document security manager is further configured to:
   generate a decryption key request based on authenticated user attributes;
   transmit the decryption key request to a key management server;
   receive a decryption key from the key management server, wherein the decryption key is derived from the user's attribute set and a master secret key;
   selectively decrypt portions of the document using the received decryption key; and
   render a partially decrypted version of the document with authorized content visible and unauthorized content remaining obfuscated.
12. The system according to any one of aspects 8 to 11,
   wherein the cryptographic engine implements a multi-authority attribute-based encryption scheme, and wherein generating the encrypt content requests further comprises:
   assigning each text and image portion to one or more attribute authorities based on the content type and sensitivity;
   generating separate encryption policies for each assigned authority; and
   including authority identifiers and corresponding encryption policies in the encrypt content requests,
      and/or
   wherein building the partially encrypted document further comprises:
      generating a document-specific symmetric key;
      encrypting the symmetric key using the attribute-based encryption scheme with a master public key;
      encrypting the text and image portions using the symmetric key;
      embedding the encrypted symmetric key and the encrypted content within the document structure; and
      including key recovery information that allows authorized users to reconstruct decryption keys using their attribute credentials and a subset of master private key shares,
         and/or
      wherein the digital document comprises a video file, and wherein processing the original image content further comprises:
         extracting individual frames from the video file;
         analyzing the extracted frames to identify sensitive objects or regions;
         generating temporal bounding boxes to track the identified sensitive objects or regions across multiple frames;
         applying the visual obfuscation techniques to the sensitive objects or regions within each affected frame; and
         reconstructing the video file with the obfuscated frames while maintaining the original video format and playback characteristics.
13. A non-transitory computer-readable medium storing instructions that, when executed by a processor, cause the processor to perform a method for securing document content, the method comprising:
   receiving a digital document containing original text content and original image content;
   processing the original text content to identify text content portions by:
      parsing the document to locate in-line text annotations,
      analyzing proximate text to determine the scope of each annotation,
      extracting text content within the determined scope, and
      determining encryption attributes for an attribute-based encryption scheme based on the in-line text annotations;
   processing the original image content to identify image portions by:
      detecting user-defined selections of image regions through a graphical interface, or
      employing a trained neural network to automatically identify and classify sensitive objects within the images;
   generating one or more encrypt content requests, the one or more requests including:
      the identified text portions with their associated encryption attributes,
      the identified image portions with corresponding bounding box coordinates, and
      metadata specifying the encryption schemes to be applied;
      transmitting the encrypt content requests to a cryptographic engine via a secure communication channel;
      receiving, from the cryptographic engine, encrypted text content for the text portions and encrypted image content for the image portions, wherein the cryptographic engine applies an attribute-based encryption scheme to the text portions and image portions; and
      building a partially encrypted document by:
         replacing original text content with masking symbols,
         programmatically adjusting the masking symbol width to maintain document layout and formatting,
         applying visual obfuscation techniques to the original image content based on sensitivity levels,
         embedding the encrypted text and image content as metadata within the document structure, and
         updating document properties to indicate the presence of encrypted content.
14. The non-transitory computer-readable medium of aspect 13, wherein the attribute-based encryption scheme utilizes a ciphertext-policy attribute-based encryption (CP-ABE) algorithm, and wherein the encryption attributes for text portions include:
   access policy expressions defining combinations of user attributes required for decryption, time-based constraints specifying validity periods for decryption keys, and
   hierarchical attribute structures representing organizational roles and clearance levels.
15. The non-transitory computer-readable medium of aspects 13 or 14,
   wherein processing the original image content further comprises:
   segmenting the image into multiple regions using a convolutional neural network,
   extracting feature vectors for each segmented region using a pre-trained deep learning model, classifying the sensitivity level of each region based on the extracted features, and
   generating encryption attributes for each region based on its classified sensitivity level and content type,
      and/or
   wherein the method further comprises:
      generating a decryption key request based on authenticated user attributes;
      transmitting the decryption key request to a key management server;
      receiving a decryption key from the key management server, wherein the decryption key is derived from the user's attribute set and a master secret key;
      selectively decrypting portions of the document using the received decryption key; and
      rendering a partially decrypted version of the document with authorized content visible and unauthorized content remaining obfuscated,
         and/or
      wherein the cryptographic engine implements a multi-authority attribute-based encryption scheme, and wherein generating the encrypt content requests further comprises:
         assigning each text and image portion to one or more attribute authorities based on the content type and sensitivity;
         generating separate encryption policies for each assigned authority; and
         including authority identifiers and corresponding encryption policies in the encrypt content requests.

## Claims

1. A computer-implemented method for protecting selected content in a document, the method comprising:
receiving, by a document security manager implemented on a computing device, a digital document containing original text content;
processing the original text content to identify one or more text content portions by:
parsing the document to locate in-line text annotations;
analyzing proximate text to determine the scope of each annotation;
extracting text content within the determined scope; and
determining encryption attributes for an attribute-based encryption scheme based on the in-line text annotations;
generating one or more encrypt content requests, the one or more encrypt content requests including the identified text content portions with their associated encryption attributes;
transmitting the one or more encrypt content requests to a cryptographic engine via a secure communication channel;
receiving, from the cryptographic engine, encrypted text content for the identified text content portions, wherein the cryptographic engine applies the attribute-based encryption scheme to the identified text content portions; and
building a partially encrypted document by:
replacing the original text content of the identified text content portions with masking symbols;
programmatically adjusting the width of the masking symbols to approximate the width of the replaced original text content so as to maintain document layout and formatting; and
embedding the encrypted text content as metadata within the document structure.

2. The method of claim 1, wherein processing the original text content further comprises:
identifying text decorations within the document, including bold, italic, underline, strikethrough, or color formatting;
associating the identified text decorations with corresponding sensitivity levels or encryption attributes; and
adjusting the encryption attributes for the identified text content portions based on the associated text decorations.

3. The method of claim 1, wherein programmatically adjusting the width of the masking symbols comprises adjusting the width of each masking symbol to be within 10% of the width of the corresponding replaced original text content.

4. The method of claim 1, wherein the digital document further contains original image content, the method further comprising processing the original image content to identify image portions by:
detecting user-defined selections of image regions through a graphical interface; or
employing machine learning algorithms to automatically identify and classify sensitive objects within the images.

5. The method of claim 4, wherein processing the original image content comprises employing the machine learning algorithms, and wherein the machine learning algorithms comprise a trained neural network.

6. The method of claim 4 or 5, wherein processing the original image content further comprises:
segmenting an image of the original image content into multiple regions using a convolutional neural network;
extracting feature vectors for each segmented region using a pre-trained deep learning model;
classifying the sensitivity level of each region based on the extracted features; and
generating encryption attributes for each region based on its classified sensitivity level and content type.

7. The method of any one of claims 4 to 6, wherein the one or more encrypt content requests further include the identified image portions with corresponding bounding box coordinates, and metadata specifying the encryption schemes to be applied, and wherein the method further comprises receiving, from the cryptographic engine, encrypted image content for the identified image portions, wherein the cryptographic engine applies the attribute-based encryption scheme to the identified image portions.

8. The method of any one of claims 4 to 7, wherein building the partially encrypted document further comprises applying visual obfuscation techniques to the original image content based on sensitivity levels, and updating document properties to indicate the presence of encrypted content.

9. The method of any one of claims 4 to 7,
wherein the digital document comprises a video file, and wherein processing the original image content further comprises:
extracting individual frames from the video file;
analyzing the extracted frames to identify sensitive objects or regions;
generating temporal bounding boxes to track the identified sensitive objects or regions across multiple frames;
applying visual obfuscation techniques to the sensitive objects or regions within each affected frame; and
reconstructing the video file with the obfuscated frames while maintaining the original video format and playback characteristics.

10. The method of claim 1, wherein the encrypted text content is stored as metadata in custom properties of the document structure.

11. The method of claim 4, further comprising providing a class-formula mapping defining relationships between image classes and encryption formulas, and using the class-formula mapping to determine an encryption policy for each identified image portion based on a detected image class of the identified image portion.

12. The method of claim 1, wherein the attribute-based encryption scheme utilizes a ciphertext-policy attribute-based encryption (CP-ABE) algorithm.

13. The method of claim 7,
wherein the cryptographic engine implements a multi-authority attribute-based encryption scheme, and wherein generating the one or more encrypt content requests further comprises:
assigning each identified text content portion and each identified image portion to one or more attribute authorities based on a content type and a sensitivity of the portion;
generating separate encryption policies for each assigned authority; and
including authority identifiers and corresponding encryption policies in the one or more encrypt content requests.

14. A data processing system comprising means for carrying out the method of any one of the preceding claims.

15. A non-transitory computer-readable medium comprising instructions which, when executed by a computer, cause the computer to carry out the method of any one of claims 1 to 13.
